# EUROPEAN PATENT APPLICATION

(11) **EP 1 605 459 A2**
(43) Date of publication of application: **14.12.2005**
(21) Application number: 05020246.4
(22) Date of filing: 09.07.2002
(51) Int. Cl.: G11B 20/00, G06F 1/00

(54) **A transmission apparatus that transmits a digital work via a network**

(30) Priority: 09.07.2001 JP 2001208533
(62) Divisional of application: 02015287.2
(71) Applicant: MATSUSHITA ELECTRIC INDUSTRIAL CO., LTD., Kadoma-shi, Osaka 571-8501 (JP)
(72) Inventor: Harada, Shunji, Osaka-fu 557-0045 (JP); Futa, Yuichi, Osaka-shi Osaka-fu 534-0002 (JP); Miyazaki, Masaya, Ikeda-shi Osaka-fu 563-0022 (JP); Sekibe, Tsutomu, Hirakata-shi Osaka-fu, 573-0047 (JP); Nakanishi, Yoshiaki, Tokyo-to 166-0014 (JP); Matsuzaki, Natsume, Minou-shi Osaka-fu 562-0023 (JP)
(74) Representative: Grünecker, Kinkeldey, Stockmair & Schwanhäusser Anwaltssozietät

(57) **Abstract**

A transmission apparatus that transmits a digital work via a network, the transmitted digital work being written to a portable recording medium apparatus via a reception apparatus, the transmission apparatus comprising: a storage unit, a distribution encryption key, an encryption unit, a transmission unit operable to transmit the encrypted content and the first encrypted content key via the network, the encryption unit further encrypts the original usage condition key using the distribution encryption key, to generate a first encrypted usage condition key, and encrypts the usage condition information using the original usage condition key, to generate first encrypted usage condition information, and the transmission unit further transmits the first encrypted usage condition key and the first encrypted usage condition information via the network.

## Description

This application is based on an application No. 2001-208533 filed in Japan, the content of which is hereby incorporated by reference.

### BACKGROUND OF THE INVENTION

### (1) Field of the Invention

The present invention relates to a technique for protecting copyright of digital works, and in particular to a copyright protection technique used in playback and recording of digital works.

### (2) Description of the Related Art

In recent years it has become common for digital works such as documents, music, video, and computer programs to be distributed through networks such as the Internet. This enables users to easily extract various works via the network, record the extracted works on a recording medium, and then play back the works.

However, while there is an advantage that digital works can be easily copied is this way, there is also a problem that the rights of the copyright holder are easily infringed.

Conventional music distribution systems take, for example, the following measures to deal with this problem.
(1) The content provision server stores encrypted content, an encrypted title key that has been used in encrypting the content, and encrypted usage condition data for the content. The encrypted content is content such as music that has been encrypted with the title key. The title key is unique to that content. In response to a request from a user, the content provision server encrypts the title key and the usage condition data that correspond to the content to be transmitted, with a user unique key that is unique to the user, to generate an encrypted title key and encrypted usage condition data.
   The user's computer obtains the encrypted content, the encrypted title key and the encrypted usage condition data according to user instructions, from the content provision server to which it is connected via a network, and stores the obtained encrypted content and data.
(2) The computer stores in advance the user unique key. A recording medium for recording content in is inserted in the computer by the user. The recording medium pre-stores a recording medium unique key that is unique to the recording medium.
   The computer, according to instructions from the user, decrypts the stored encrypted title key and encrypted usage condition data, using the user unique key, to temporarily generate a decrypted title key and decrypted usage condition data. Next, the computer securely reads the medium unique key from the recording medium, and encrypts the decrypted title key and decrypted usage condition data using the read medium unique key, to generate a re-encrypted title key and re-encrypted usage condition data, and records the encrypted content, the re-encrypted title key, and the re-encrypted usage condition data in the recording medium. After recording these in the recording medium, the computer deletes the temporarily generate decrypted title key and decrypted usage condition data.
(3) The user removes the recording medium from the computer and inserts it in a playback apparatus. The playback apparatus securely reads the recording medium unique key from the recording medium, and reads the encrypted content, the re-encrypted title key, and the re-encrypted usage condition data from the recording medium. Then, the playback apparatus decrypts the re-encrypted title key and the re-encrypted usage condition data using the recording medium unique key, to generate the title key and the usage condition data. Then, the playback apparatus decrypts the encrypted content using the generated title key, to generate the content, and plays back the generated content within the range permitted by the usage condition data.

In such a system, since the encrypted title key is decrypted and then re-encrypted (hereinafter "encryption conversion") in the computer, the decrypted title key is temporarily generated and stored by the computer. This gives rise to a problem that it is technically possible for a user with ill intent to discover the title key and use this title key to decrypt the encrypted content dishonestly (this act is referred to hereinafter as hacking).

One conventional technique to solve this problem is to incorporate unnecessary instructions and branch instructions into the computer' s program in advance to make hacking difficult. However, this increases the size of the program, and slows the performance of the computer.

### SUMMARY OF THE INVENTION

In order to solve the above-described problem, the object of the present invention is to provide a digital work protection system, recording medium apparatus, transmission apparatus and playback apparatus that make hacking difficult without increasing the size of the computer program and without slowing the performance of the computer.

In order to achieve the aforementioned object, the present invention is a digital work protection system in which a digital work transmitted by a transmission apparatus is written to a portable recording medium apparatus via a reception apparatus, and played back by a playback apparatus, including: the transmission apparatus operable to encrypt original content that is the digital work, based on a distribution encryption key, to generate first encrypted information, and transmit the generated first encrypted information via a network; the reception apparatus operable to, in a state in which the recording medium apparatus is connected to the reception apparatus, receive the first encrypted information via the network, and output the received first encrypted information to the recording medium apparatus; the recording medium apparatus, including: an information storage area; and a tamper-proof module unit operable to (a) obtain the output first encrypted information, (b) decrypt the obtained first encrypted information, based on a distribution decryption key, to generate intermediate information, (c) encrypt the intermediate information, based on a medium unique key that is unique to the recording medium apparatus, to generate second encrypted information, and (d) write the generated second encrypted information to the information storage area; and the playback apparatus operable to, in a state in which the recording medium apparatus to which the second encrypted information has been written is connected to the playback apparatus, (a) read the second encrypted information from the information storage area, (b) read securely the medium unique key, (c) decrypt the read second encrypted information, based on the medium unique key, to generate decrypted content, and (d) play back the decrypted content.

According to the stated construction, since the first encrypted information, which is composed of encrypted original content, is decrypted and then further encrypted in the tamper-proof module unit in the recording medium apparatus, hacking by a dishonest third party is made difficult.

Here, the transmission apparatus may (a) store in advance original content, and an original content key that is unique to the original content, (b) obtain the distribution encryption key that is used in distributing digital content, (c) encrypt the original content using the original content key, to generate encrypted content, (d) encrypt the original content key using the obtained distribution encryption key, to generate a first encrypted content key, and (d) transmit the first encrypted information that includes the generated encrypted content and the first encrypted content key; the reception apparatus may receive the first encrypted information, and output the received first encrypted information; the tamper-proof module unit may (a) store in advance the distribution decryption key and the medium unique key, (b) obtain the output first encrypted information, (c) decrypt the first encrypted content key using the distribution decryption key, to generate an intermediate content key, (d) encrypt the generated intermediate content key using the medium unique key, to generate a second encrypted content key, and (e) write the second encrypted information that includes the obtained encrypted content and the second encrypted content key to the information storage area; and the playback apparatus may (a) obtain securely the medium unique key from the recording medium apparatus, (b) read the second encrypted information that includes the encrypted content and the second encrypted content key from the information storage area, (c) decrypt the second encrypted content key using the obtained medium unique key, to generate a decrypted content key, and (d) decrypt the read encrypted content using the generated decrypted content key, to generate decrypted content.

According to the stated construction, since the only processing performed in the recording medium apparatus is decrypting the content key using the distribution decryption key and then further encrypting the decrypted content key using the medium unique key, the processing load on the recording medium apparatus is lightened.

Furthermore, the present invention is a digital work protection system composed of a transmission apparatus that transmits a digital work, a reception apparatus that receives the transmitted digital work via a network, and records the received digital work to a portable recording medium apparatus, a playback apparatus that plays back the digital work that is recorded in the recording medium apparatus, and the recording medium apparatus, the transmission apparatus including: a storage unit operable to store in advance original content that is the digital work, and an original content key that is unique to the original content; a distribution encryption key obtaining unit operable to obtain a distribution encryption key that is used in digital work distribution; an encryption unit operable to encrypt the original content using the original content key, to generate encrypted content, and encrypt the original content key using the obtained distribution encryption key, to generate a first encrypted content key; and a transmission unit operable to transmit the encrypted content and the first encrypted content key via a network; the reception apparatus, in a state in which the recording medium apparatus is connected thereto, including: a reception unit operable to receive the encrypted content and the first encrypted content key via the network; and an output unit operable to output the received encrypted content and the received first encrypted content key; the recording medium apparatus including: a information storage unit that includes an area for storing information, a tamper-proof module unit that includes: a key storage sub-unit operable to store in advance a distribution decryption key and a medium key that is unique to the recording medium apparatus; an obtaining sub-unit operable to obtain the output encrypted content and the output first encrypted content key; a decryption sub-unit operable to decrypt the first encrypted content key using the distribution decryption key, to generate an intermediate content key; an encryption sub-unit operable to encrypt the generated intermediate content key using the medium unique key, to generate a second encrypted content key; and a writing sub-unit operable to write the obtained encrypted content and the generated second encrypted content key to the information storage unit, and the playback apparatus, in a state in which the recording medium apparatus to which the encrypted content and the second encrypted content are written is connected thereto, including: a key obtaining unit operable to obtain securely the medium original key from the key storage unit; a reading unit operable to read the encrypted content and the second encrypted content key from the information storage unit; a content key decryption unit operable to decrypt the read second encrypted content key using the obtained medium unique key, to generate a decrypted content key; a content decryption unit operable to decrypt the read encrypted content using the generated decrypted content key, to generate decrypted content; and a playback unit operable to play back the generated decrypted content.

According to the stated construction, since decryption and re-encryption are performed by the tamper-proof module unit of the recording medium apparatus, hacking by a dishonest third party is made difficult. Furthermore, since encrypted content is not decrypted and encrypted in the tamper-proof module unit, the processing load on the recording medium apparatus is lightened.

Furthermore, the present invention is a transmission apparatus that transmits a digital work via a network, the transmitted digital work being written to a portable recording medium apparatus via a reception apparatus, the transmission apparatus including: a storage unit operable to store in advance original content that is the digital work, and an original content key that is unique to the original content; a distribution encryption key obtaining unit operable to obtain a distribution encryption key that is used in digital work distribution; an encryption unit operable to encrypt the original content using the original content key, to generate encrypted content, and encrypt the original content key using the obtained distribution encryption key, to generate a first encrypted content key; and a transmission unit operable to transmit the encrypted content and the first encrypted content key via the network.

According to the stated construction, hacking of the tamper-proof module unit in the recording medium apparatus by a dishonest third party is made difficult, and a transmission apparatus is provided that transmits encrypted digital works so as to lighten the processing load on the recording medium apparatus.

Here, the storage unit may further store usage condition information that shows conditions for using the digital work, and an original usage condition key that is unique to the usage condition information, the encryption unit may further encrypt the original usage condition key using the distribution encryption key, to generate a first encrypted usage condition key, and encrypts the usage condition information using the original usage condition key, to generate first encrypted usage condition information, and the transmission unit may further transmit the first encrypted usage condition key and the first encrypted usage condition information via the network.

According to the stated construction, since usage condition information showing usage conditions for the content is transmitted, playback of content can be controlled in the playback apparatus.

Here, the distribution encryption key obtaining unit may obtain the distribution encryption key, the distribution encryption key being a public key generated using a public key generation algorithm, and the encryption unit may encrypt using the distribution encryption key according to a public key encryption algorithm.

According to the stated construction, encryption is performed using a public key, therefore the key can be distributed safely.

Here, transmission apparatus may further include: a revoke list unit that includes an area for recording an invalid distribution encryption key; and a registration unit operable to, when the distribution decryption key used in generating the distribution encryption key is exposed, write the distribution encryption key to the revoke list unit; and the distribution key obtaining unit, when the transmission apparatus newly transmits content that is a digital work, may obtain a new distribution key, judges whether the obtained distribution key is written in the revoke list unit, and, when the obtained distribution key is written in the revoke list unit, prohibits the encryption unit to encrypt and prohibits the transmission unit to transmit.

According to the stated construction, use of the public key can be limited in accordance with the secret key being exposed, therefore content can be distributed even more safely.

Here, the storage unit may further store usage condition information that shows conditions for using the digital work, and the transmission unit may read the usage condition information from the storage unit, apply a hash algorithm to the read usage condition information, to generate a hash value, and transmit securely the generated hash value and the read usage condition information via the network.

According to the stated construction, when usage condition data is tampered with along the distribution path, usage of the digital work corresponding to the usage condition information can be prohibited.

Here, the transmission apparatus may further include an authentication unit operable to perform mutual device authentication with the recording medium apparatus, wherein the distribution encryption key obtaining unit obtains the distribution encryption key from the recording medium apparatus only when the authentication succeeds, the encryption unit encrypts only when the authentication succeeds, and the transmission unit transmits only when the authentication succeeds.

According to the stated construction, the transmission apparatus and the recording medium apparatus mutually verify device authenticity, therefore preventing output of a digital work to a non-authentic device.

Here, the transmission apparatus may further include an update information storage unit operable to store in advance update information for updating a tamper-proof module unit of the recording medium apparatus; and an update information transmission unit operable to read the update information from the update information storage unit, and transmit the read update information via the network and the reception apparatus to the recording medium apparatus.

According to the stated construction, information for updating the tamper-proof modules is transmitted, enabling updating of the tamper-proof modules in the recording medium apparatus.

Here, the transmission apparatus may further include a hash unit operable to read the update information from the update information storage unit, apply a hash algorithm to the read update information, to generate a hash value, and transmit securely the generated hash value via the network and the reception apparatus to the recording medium apparatus.

According to the stated construction, when the information for updating the tamper-proof module is tampered with along the distribution path, usage of the digital work corresponding to the information for updating the tamper-proof module is prohibited.

Here, the update information may include information for updating in the tamper-proof module unit at least one of (a) an encryption method, (b) a decryption method, and (c) a data conversion method of converting a distribution data format to a recording data format, and the update information transmission unit may read the update information, and transmit the read update information.

According to the stated construction, the update information includes information for updating the encryption method, the decryption method, or the conversion method, therefore the updating the encryption method, the decryption method, or the conversion method can be updated.

Furthermore, the present invention is a portable recording medium apparatus on which is recorded a digital work that is transmitted from a transmission apparatus via a reception apparatus, the recording medium apparatus being connected to the reception apparatus, and the transmission apparatus encrypting original content that is a digital work, based on a distribution encryption key, to generate first encrypted information, and transmitting the generated first encrypted information via a network to the reception apparatus, the recording medium apparatus including: an information storage unit that includes an information storage area; and a tamper-proof module unit including: a key storage sub-unit operable to store in advance a distribution decryption key and a medium unique key that is unique to the recording medium apparatus; an obtaining sub-unit operable to obtain the transmitted first encrypted information via the reception apparatus; an decryption sub-unit operable to decrypt the first encrypted information, based on the distribution decryption key, to generate intermediate information; an encryption sub-unit operable to encrypt the intermediate information, based on the medium unique key, to generate second encrypted information; and a writing sub-unit operable to write the generated second encrypted information to the information storage unit.

According the stated construction, a recording medium apparatus device is provided that makes hacking by a dishonest third party difficult.

Here, the transmission apparatus may (a) store in advance original content, and an original content key that is unique to the original content, (b) obtain the distribution encryption key that is used in distributing digital content, (c) encrypt the original content using the original content key, to generate encrypted content, (d) encrypt the original content key using the obtained distribution encryption key, to generate a first encrypted content key, and (d) transmit the first encrypted information that includes the generated encrypted content and the first encrypted content key; the obtaining sub-unit may obtain the obtained first encrypted information; the decryption unit may decrypt the first encrypted content key using the distribution decryption key, to generate an intermediate content key, and generate intermediate information that includes the encrypted content and the generated intermediate content key; the encryption unit may encrypt the intermediate content key included in the intermediate information, using the medium unique key, to generate a second content key, and generate second encrypted information that includes the encrypted content included in the intermediate information and the second encrypted content key; and the writing sub-unit may write the second encrypted information.

According to the stated construction, since the only processing performed in the recording medium apparatus is decryption of the content key using the distribution decryption key and then further encryption of the decrypted content key using the medium unique key, the processing load on the recording medium apparatus is lightened.

Here, the transmission apparatus may further (a) store usage condition information showing conditions for usage of the digital work, and an original usage condition key that is unique to the usage condition information, (b) encrypt the original usage condition key, using the distribution encryption key, to generate a first encrypted usage condition key, (c) encrypt the usage condition information using the original usage condition key, to generate first encrypted usage condition information, and (d) transmit the first encrypted usage condition key and the first encrypted usage condition information via the network to the reception apparatus; the obtaining sub-unit may further obtain the first encrypted usage condition key and the first encrypted usage condition information via the reception apparatus, the decryption sub-unit may further decrypt the first encrypted usage condition key using the distribution key, to generate an intermediate usage condition key, and decrypt the first encrypted usage condition information using the generated intermediate usage condition key, to generate intermediate usage condition information; the encryption sub-unit may further encrypt the intermediate usage condition information using the medium unique key, to generate second encrypted usage condition information; and the writing sub-unit may further write the generated second encrypted usage condition information.

According to the stated construction, since usage condition information showing usage conditions for the content is transmitted, playback of content can be controlled in the playback apparatus.

Here, the transmission apparatus may further obtain the distribution encryption key, which is a public key generated using a public key generation algorithm, based on a distribution decryption key that is a secret key, and perform encryption according to a public key encryption algorithm using a distribution encryption key that is a public key; and the decryption sub-unit may perform decryption according to a public key decryption algorithm using a distribution decryption key.

According to the stated construction, encryption is performed using a public key, and decryption is performed using a secret key, therefore the key can be safely distributed.

Here, the tamper-proof module unit may further include:
a conversion sub-unit operable to convert a format of the intermediate information from a distribution data format into a recording data format, to generate recording intermediate information, wherein the encryption sub-unit encrypts the recording intermediate information instead of the intermediate information.

According to the stated construction, the data format for distribution is converted to a data format for recording, therefore differences in the distribution data format and the recording data format can be dealt with. Furthermore, newly-added data formats can also be dealt with easily.

Here, the transmission apparatus may store in advance update information for updating the tamper-proof module unit of the recording medium apparatus, read the update information, and transmit the read update information to the recording medium apparatus via the network and the reception apparatus; the tamper-proof module unit may include a microprocessor and a semiconductor memory that stores a computer program, and compositional elements of the tamper-proof module unit may operate according to the microprocessor operating in accordance with the computer program; the obtaining sub-unit may obtain the update information via the reception apparatus; and the tamper-proof module unit may further include: a update sub-unit operable to update the computer program using the obtained update information, resulting in the compositional elements included in the tamper-proof module unit being updated.

According to the stated construction, information for updating the tamper-proof modules can be obtained, and the tamper-proof modules in the recording medium apparatus updated.

Here, the transmission apparatus may further read the update information, apply a hash algorithm to the read update information to generate a first hash value, and transmit securely the generated hash value to the recording medium apparatus via the network and the reception apparatus; the tamper-proof module unit may further include: a hash sub-unit operable to apply the hash algorithm to the obtained update information, to generate a second hash value; and a comparison judgement sub-unit operable to judge whether the obtained first hash value and the generated second hash value match; and the update sub-unit may update only when the comparison judgement sub-unit judges that the first hash value and the second hash value match.

According to the stated construction, when the update information is tampered with along the distribution path, use of the update information can be prohibited.

Here, the update information stored by the transmission apparatus may include information for updating in the tamper-proof module unit at least one of (a) an encryption method, (b) a decryption, and (c) a conversion method used by the tamper-proof module unit for converting a distribution data format to a recording data format; the transmission apparatus may transmit the update information; the obtaining sub-unit may obtain the update information via the reception apparatus; and the update sub-unit may update the computer program using the obtained update information, resulting in at least one of the encryption sub-unit, the encryption sub-unit, and the conversion sub-unit in the tamper-proof module being updated.

According to the stated construction, the update information includes information for updating the encryption method, the decryption method, or the conversion method, therefore the updating the encryption method, the decryption method, or the conversion method can be updated.

Here, the transmission apparatus may further (a) store usage condition information that shows conditions for usage of the digital work, (b) read the usage condition information, (c) apply a hash algorithm to the read usage condition information, to generate a hash value, and (d) transmit securely the generated hash value and the read usage condition information via the network; the obtaining unit may further obtain the transmitted first hash value and the transmitted usage condition data via the reception apparatus; the tamper-proof module unit may further include: a hash sub-unit operable to apply the hash algorithm to the obtained usage condition information, to generate a second hash value; and a comparison judgement sub-unit operable to judge whether the obtained first hash value and the generated second hash value match; the encryption sub-unit may encrypt only when the comparison judgement unit judges that the first hash value and the second hash value match, and the writing-sub unit may write only when the comparison judgement unit judges that the first hash value and the second hash value match.

According to the stated construction, when usage condition data is tampered with along the distribution path, usage of the digital work corresponding to the usage condition information can be prohibited.

Here, the transmission apparatus may further perform mutual device authentication with the recording medium apparatus, and obtain the distribution encryption key, and encrypt and transmit only when the authentication is successful; the tamper-proof module unit may further include: an authentication sub-unit operable to mutually authenticate device authenticity with the transmission apparatus; the obtaining sub-unit may obtain only when the authentication is successful; the decryption sub-unit may decrypt only when the authentication is successful; the encryption sub-unit may encrypt only when the authentication is successful; and the writing sub-unit may write only when the authentication is successful.

According to the stated construction, the transmission apparatus and the recording medium apparatus perform mutual device authentication, therefore preventing obtaining of a digital work from a non-authentic device.

Here, the recording medium apparatus may be connected to the playback apparatus, the playback apparatus may read information from the information storage unit, and the tamper-proof module unit may further include: an authentication sub-unit operable to perform mutual device authentication with the playback apparatus, and permit the playback apparatus to read information only when the authentication is successful.

According to the stated construction, the recording medium apparatus and the playback apparatus perform mutual device authentication, therefore preventing output of a digital work to a non-authentic device.

Here, the decryption sub-unit may be provided in advance with a plurality of decryption methods, and decrypt using one decryption method selected from among the plurality of decryption methods, the selected decryption method being a inverse conversion of an encryption method used in the transmission apparatus; and the encryption sub-unit may be provided in advance with a plurality of encryption methods, and encrypt using one encryption method selected from among the plurality of encryption methods.

According to the stated construction, the recording medium apparatus device selects one encryption method from amongst a plurality of encryption methods, therefore the encryption method used by the recording method can be easily changed in order to correspond that used by the transmission apparatus or the playback apparatus.

Here, the key storage sub-unit may store a plurality of distribution decryption key candidates, and one distribution decryption key candidate may be selected from among the plurality of distribution decryption key candidates as the distribution decryption key, and the decryption sub-unit may use the selected distribution decryption key.

According to the stated construction, the recording medium apparatus selects one distribution secret key from a plurality of distribution secret keys, therefore even if the selected distribution secret key is exposed, the recording medium apparatus can still be used by selecting another distribution secret key.

Here, the tamper-proof module unit may be made tamper-proof according to one of software, hardware', and a combination of software and hardware.

According to the stated construction, protection against dishonest attacks on the tamper-proof modules is made possible.

Furthermore, the present invention is a playback apparatus that plays back a digital work that is transmitted by a transmission apparatus via a network and a reception apparatus, and written to a recording medium apparatus, the transmission apparatus encrypting original content that is the digital work, based on a distribution encryption key, to generate first encrypted information, and transmits the generated first encrypted information via the network to the reception apparatus, in a state in which the recording medium apparatus is connected to the reception apparatus, the recording medium apparatus including: an information storage area; and a tamper-proof module unit operable to (a) obtain the output first encrypted information, (b) decrypt the obtained first encrypted information based on a distribution decryption key, to generate intermediate information, (c) encrypt the intermediate information based on a medium unique key that is unique to the recording medium apparatus, to generate second encrypted information, and (d) write the generated second encrypted information to the information storage area, in a state in which the recording medium apparatus to which the second encrypted information has been written is connected to thereto, and the playback apparatus, including: a key obtaining unit operable to obtain securely the medium unique key from the recording medium apparatus; a reading unit operable to read the second encrypted information from the information storage area; a decryption unit operable to decrypt the read second encrypted information, based on the medium unique key, to generate decrypted content; and a playback unit operable to play back the generated content.

According to the stated construction, playback can be performed of a digital work recorded on a recording medium apparatus that makes hacking by a dishonest third party difficult.

Here, the transmission apparatus may (a) store in advance original content and an original content key that is unique to the original content, (b) obtain the distribution encryption key that is used in distributing digital content, (c) encrypt the original content using the original content key, to generate encrypted content, (d) encrypt the original content key using the obtained distribution encryption key, to generate a first encrypted content key, and (e) transmit the first encrypted information that includes the generated encrypted content and the first encrypted content key; the tamper-proof module unit may (a) store in advance the distribution decryption key and the medium unique key, (b) obtain the output first encrypted information, (c) decrypt the first encrypted content key using the distribution decryption key, to generate an intermediate content key, (d) encrypt the generated intermediate content key using the medium unique key, to generate a second encrypted content key, and (e) write the second encrypted information to the information storage area; the reading unit may read the second encrypted information, and the decryption unit may decrypt the read second encrypted content key using the obtained medium unique key, to generate a decrypted content key, and decrypt the read encrypted content using the generated decryption content key, to generate decrypted content.

According to the stated construction, since the only processing performed in the recording medium apparatus is decrypting the content key using the distribution decryption key and then further encrypting the decrypted content key using the medium unique key, the processing load on the recording medium apparatus is lightened.

Here, the transmission apparatus may further (a) store usage condition information that shows conditions for using the digital work, and an original usage condition key that is unique to the usage condition information, (b) encrypt the original usage condition key using the distribution encryption key, to generate a first encrypted usage condition key, (c) encrypt the usage condition information using the original usage condition key, to generate first encrypted usage condition information, and (d) transmit the first encrypted usage condition key and the first encrypted usage condition information via the network to the reception apparatus; the recording medium apparatus may further (a) obtain via the network the first encrypted usage condition key and the first encrypted usage condition information, (b) decrypt the first encrypted usage condition key using the distribution decryption key, to generate an intermediate usage condition key, (c) decrypt the first encrypted usage condition information using the generated intermediate usage condition key, to generate intermediate usage condition information, (d) encrypt the intermediate usage condition information, using the medium unique key, to generate second encrypted usage condition information, and (e) write the generated second encrypted usage condition information to the information storage area; the reading unit may further read the second encrypted usage condition information from the information storage area; the decryption unit may further decrypt the second encrypted usage condition information, based on the medium unique key, to generate decrypted usage condition information; and the playback unit may further judge, based on the generated decrypted usage condition information, whether playback of the generated decrypted content is permitted, and play back the decrypted content only when playback is judged to be permitted.

According to the stated construction, use of content can be controlled based on the obtained usage condition information.

Here, the usage condition information may include at least one of information that limits a number of times the decrypted content is played back, information that limits a period in which the decrypted content is played back, and information that limits an accumulated amount of time that the decrypted content is played back; and the playback unit may judge whether playback of the decrypted content is permitted, based on the one or more of the information that limits a number of times the decrypted content is played back, the information that limits a period in which the decrypted content is played back, and the information that limits an accumulated amount of time that the decrypted content is played back.

According to the stated construction, a judgement can be made as to whether playback of content is permitted, based on information that controls the number of times that the decrypted content is played back, information that controls the period in which the decrypted content is played back, or information that controls the total time for which the decrypted content is played back.

Here, the play back apparatus may further include: an authentication unit operable perform mutual device authentication with the recording medium apparatus; the key obtaining unit may obtain only when authentication succeeds, and the reading unit may read only when the authentication succeeds.

According to the stated construction, the playback apparatus and the recording medium apparatus perform mutual device authentication, therefore preventing obtaining of a digital work from an illegal device.

### BRIEF DESCRIPTION OF THE DRAWINGS

These and other objects, advantages and features of the invention will become apparent form the following description thereof taken in conjunction with the accompanying drawings which illustrate a specific embodiment of the invention.

In the drawings:
Fig. 1 is a block drawing showing the structure of a digital work protection system 100;
Fig. 2 is a block drawing showing the structure of a content distribution server apparatus 200 and a memory card 400;
Fig. 3 is a block drawing showing the structure of the memory card 400;
Fig. 4 is a block drawing showing the structure of a personal computer 300;
Fig. 5 is a block drawing showing the structure of the memory card 400 and a headphone stereo 500;
Fig. 6 shows a distribution data format structure;
Fig. 7 shows a recording data format structure;
Fig. 8 is a flowchart showing operations when writing to the memory card 400, and continues in Fig. 9;
Fig. 9 is a flowchart showing operations when writing to the memory card 400, and continues in Fig. 10;
Fig. 10 is a flowchart showing operations when writing to the memory card 400, is a continuation of Fig. 9;
Fig. 11 is a flowchart showing operations when reading from the memory card 400, and continues in Fig. 12;
Fig. 12 is a flowchart showing operations when reading from the memory card 400, and is a continuation of Fig. 11;

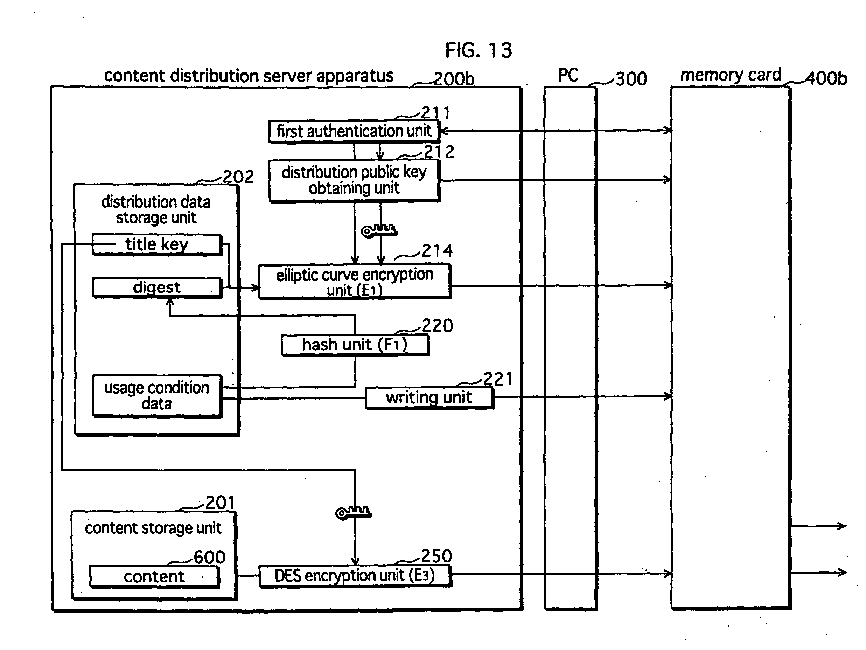

Fig. 13 is a block drawing showing the structure of a content distribution server 200b and a memory card 400b;
Fig. 14 is a block drawing showing the structure of the memory card 400b;
Fig. 15 is a block drawing showing the structure of the memory card 400b and the headphone stereo 500;
Fig. 16 shows a distribution data format structure;
Fig. 17 shows a recording data format structure;
Fig. 18 is a flowchart showing operations when writing to the memory card 400b, and continues in Fig. 19;
Fig. 19 is a flowchart showing operations when writing to the memory card 400b, and continues in Fig. 20;
Fig. 20 is a flowchart showing operations when writing to the memory card 400b, and is a continuation of Fig. 19;
Fig. 21 is a block drawing of the structure of a content distribution server 200c and a memory card 400c; and
Fig. 22 is a flowchart showing operations in a digital work protection system 100c of a computer incorporated in a tamper-proof module unit 410c in the memory card 400c, and updating of data.

### DESCRIPTION OF THE PREFERRED EMBODIMENT

### 1. First Embodiment

The following describes a digital work protection system 100 as a an embodiment of the present invention.

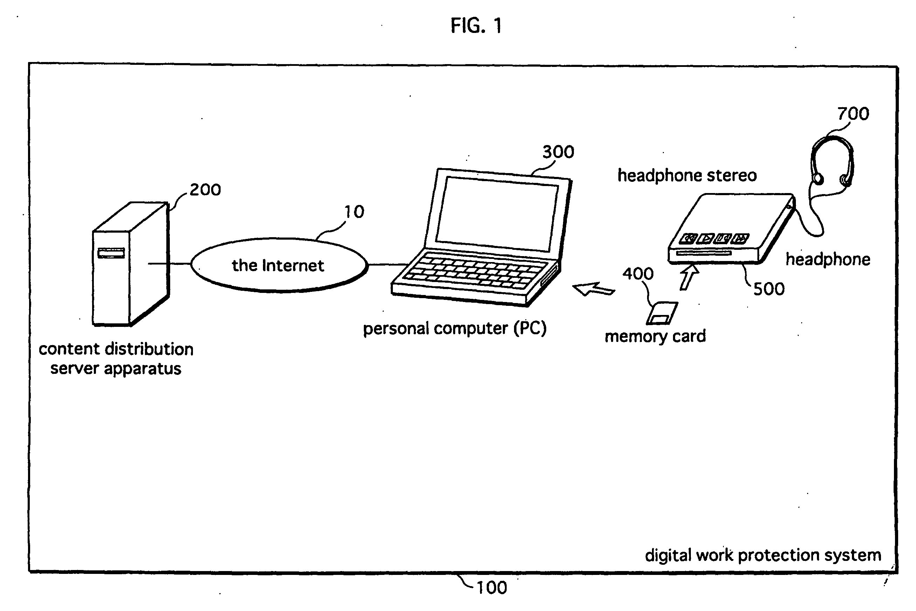

The digital work protection system 100, as shown in Fig. 1, is composed of a content distribution server apparatus 200, a personal computer (PC) 300, a portable memory card 400, and a headphone stereo 500. The PC 300 is connected to the content distribution server apparatus 200 via the Internet 10.

The user inserts the memory card 400 into the PC 300. The PC 300, according to instructions from the user, obtains encrypted content from the content distribution server 200, and writes the obtained content to the memory card 400. Next, the user removes the memory card 400 from the PC 300, and inserts the memory card 400 into the headphone stereo 500. The headphone stereo 500 decrypts the encrypted content recorded in the memory card 400, to generate content which it plays back and then outputs to headphones 700.

This enables the user to enjoy the played back content.

1.1 Structure of the content distribution server apparatus 200

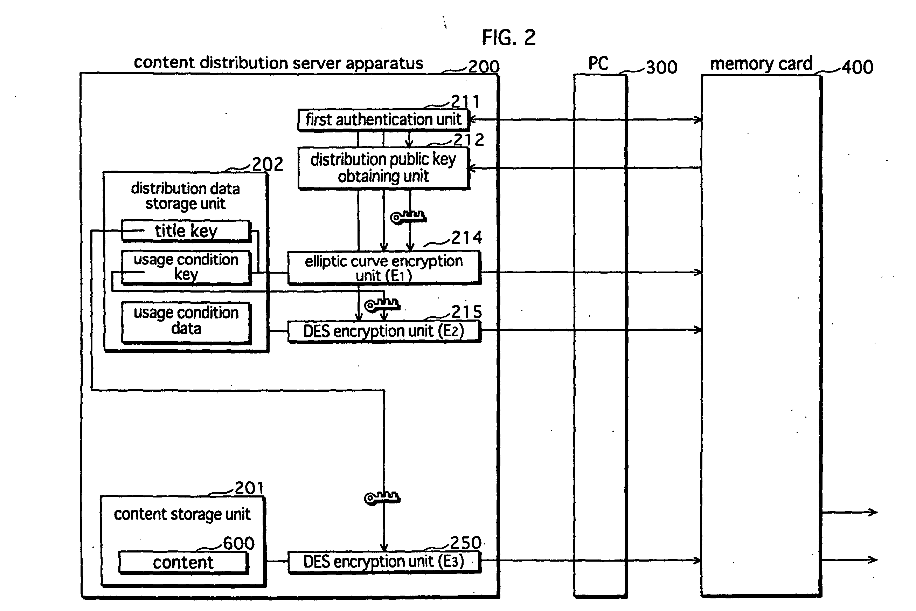

The content distribution server apparatus 200, as shown in Fig. 2, is composed of a content storage unit 201, a distribution data storage unit 202, a first authentication unit 211, a distribution public key obtaining unit 212, and elliptic curve encryption unit 214, a DES encryption unit 215, and a DES encryption unit 250.

Specifically, the content distribution server apparatus 200 is a computer system composed of a microprocessor, a RAM (random access memory), a ROM (read only memory), a hard disk unit, a LAN (local area network) connection unit, a display unit, a keyboard, a mouse, and so on. Computer programs are stored in the RAM or the hard disk unit. The content distribution server apparatus 200 achieves its functions by the microprocessor operating according to the computer programs.

### (1) Content storage unit 201

Specifically, the content storage unit 201 is composed of a hard disk unit, and stores in advance content 600. Here, the content 600 is a digital work such as music, a movie, an electronic book, or a game program.

### (2) Distribution data storage unit 202

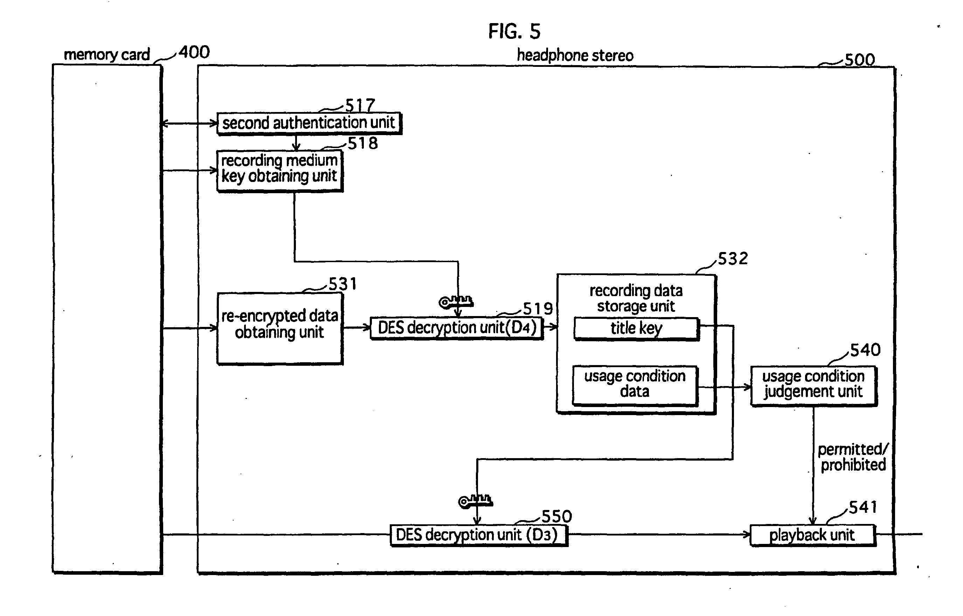

Specifically, the distribution data storage unit 202 is composed of a hard disk, and, as shown in Fig. 5, stores in advance a title key, a usage condition key, and usage condition data, in the stated order. The title key, the usage condition key, and the usage condition data correspond to the content 600 stored in the content storage unit 201.

The title key is a random number generated for the particular content, and is 56 bits in length.

The usage condition key is a random number generated for the particular usage conditions, and is 56 bits in length.

The usage condition data is composed of playback count information, playback period information, and playback accumulated time information.

The playback count information is 16 bits in length, and limits the number of times that the user is able to play back the content stored corresponding to the usage condition data to a total value. For example, if the playback count information is "10", the user is permitted to play back the content a maximum of ten times. If "FFFF" (hexadecimal) is specified as the playback count information, playback is not limited.

The playback period information is 64 bits in length, and limits when the user is able to play back the content stored corresponding to the usage condition data. The playback period information is composed of a playback permission start date/time that shows a date and time at which the playback period starts, and a playback permission end date/time that shows a date and time at which the playback period ends. The user is only permitted to play back the content within the period from the playback permission start date/time to the playback permission end date/time. The user may play back the content any number of times during this period.

Here, when both playback period information and playback count information are specified, the content can no longer be played back when either the permitted period has finished or after the content has been played back the permitted number of times.

The playback accumulated time information limits the length of time that the user is able to play back the content stored corresponding to the usage condition data to a total value. For example, if the playback accumulated time information is "10 hours", the user is permitted to play back the content as long as the accumulated value of the playback time is within 10 hours. Once the accumulated value exceeds 10 hours, playback is prohibited.

Note that although here the usage condition data is composed of playback count information, playback period information and playback accumulated time information, it is possible for the usage condition data to be composed of all, any two, or any one of the stated three types of information.

### (3) First authentication unit 211

The first authentication unit 211 performs challenge-response type mutual device authentication via the Internet 10 and the PC 300 with a first authentication unit 411 (described later) of the memory card 400. Specifically, the first authentication unit 211 performs authentication of the first authentication unit 411, and then is authenticated by the first authentication unit 411. Mutual device authentication is considered to have succeed only when both authentications succeed. Note that as challenge response type mutual device authentication is commonly known, a description thereof is omitted here.

When both authentications succeed, the first authentication unit 211 outputs authentication success information showing that authentication has succeeded to the distribution public key obtaining unit 212, the elliptic curve encryption unit 214, and the DES authentication unit 215.

When authentication fails, the first authentication unit 211 aborts processing. Consequently, the content stored by the content distribution server apparatus 200 is not output to the memory card 400.

### (4) Distribution public key obtaining unit 212

The distribution public key obtaining unit receives the authentication success information from the first authentication unit 211.

On receiving the authentication success information, the distribution public key obtaining unit 212 securely receives, via the Internet 10 and the PC 300, the distribution public key from a distribution public key storage unit 412 (described later) in the memory card 400, and outputs the received distribution public key to the elliptic curve encryption unit 214.

### (5) Elliptic curve encryption unit 214

The elliptic curve encryption unit 214 receives the authentication success information from the first authentication unit 211.

On receiving the authentication success information, the elliptic curve encryption unit 214 receives the distribution public key from the distribution public key obtaining unit 212, and reads the title key and the usage condition key from the distribution data storage unit 202. Then, the elliptic curve encryption unit 214 encrypts combined information (information combining the title key and the usage condition key) by applying an encryption algorithm E1 according to an elliptic curve encryption method using the received distribution public key, to generate encrypted combined information. Then, the elliptic curve encryption unit 214 outputs the generated encrypted combined information via the Internet 10 and the PC 300 to an elliptic curve decryption unit 414 (described later) in the memory card 400.

Note that elliptic curve encryption is described in detail in "*Ango Riron no Kiso*" ("*Cryptography Theory Fundamentals*"), Douglas R. Stinson, Kyoritsu Shuppan Co. Ltd., 1996.

Note also that the blocks in Fig. 2 are connected to each other by connection lines. Here, connection lines indicate paths along which signals, information, and the like are conveyed. Among the plurality of connection lines connected to the block showing the elliptic curve encryption unit 214, the connection line on which a picture of a key is shown indicates the path along which information is conveyed to the elliptic curve encryption unit 214 as a key. This is the same for the DES encryption unit 215, and also the same in other drawings.

### (6) DES encryption unit 215

The DES encryption unit 215 receives the authentication success information from the first authentication unit 211.

On receiving the authentication success information, the DES encryption unit 215 reads the usage condition key and the usage condition data from the distribution data storage unit 202. Then, the DES encryption unit 215 encrypts the read usage condition data by applying an encryption algorithm E2 according to DES (Data Encryption Standard) using the read usage condition key, to generate encrypted usage condition data. The DES encryption unit 215 outputs the generated encrypted usage condition data via the Internet 10 and the PC 300 to a DES decryption unit 415 (described later) in the memory card 400.

### (7) DES encryption unit 250

The DES encryption unit 250 reads the title key from the distribution data storage unit 202, and reads the content 600 from the content storage unit 201. Then, the DES encryption unit 250 encrypts the read content by applying an encryption algorithm E3 according to DES using the read title key, to generate encrypted content. The DES encryption unit 250 writes the generated encrypted content to a first storage area 432 (described later) in an information storage unit 430(described later) in the memory card 400, via the Internet 10 and the PC 300.

### 1.2 Structure of the PC 300

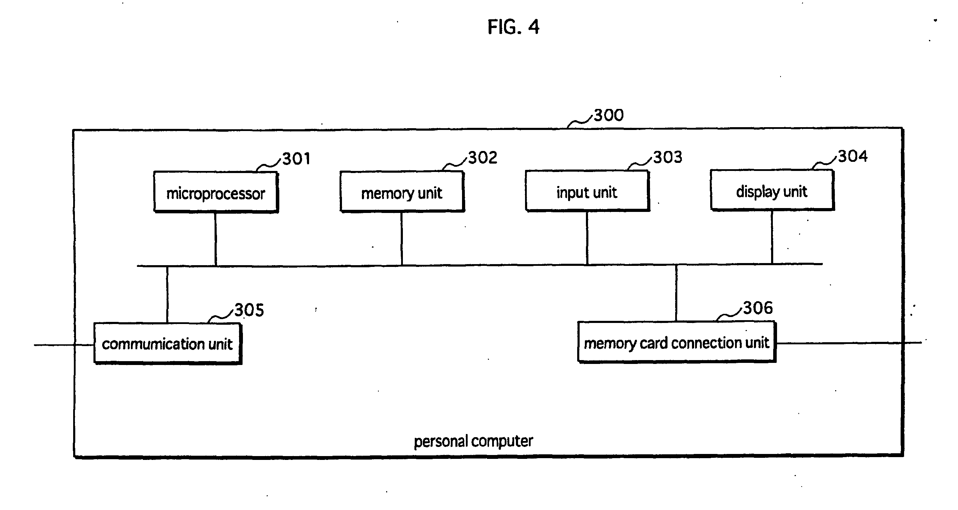

As shown in Fig. 4, the PC 300 is a computer system that includes a microprocessor 301, a memory unit 302 that is a ROM, a RAM, a hard disk, or the like, an input unit 303 that is a keyboard, a mouse or the like, a display unit 304 that is a display or the like, a communication unit 305 that communicates with external apparatuses via the Internet 10, and a memory card connection unit 306 that connects with the memory card 400. Computer programs are stored in the memory unit 302. The PC 300 achieves its functions according to operations of the microprocessor following the computer programs.

### 1.3 Structure of the memory card 400

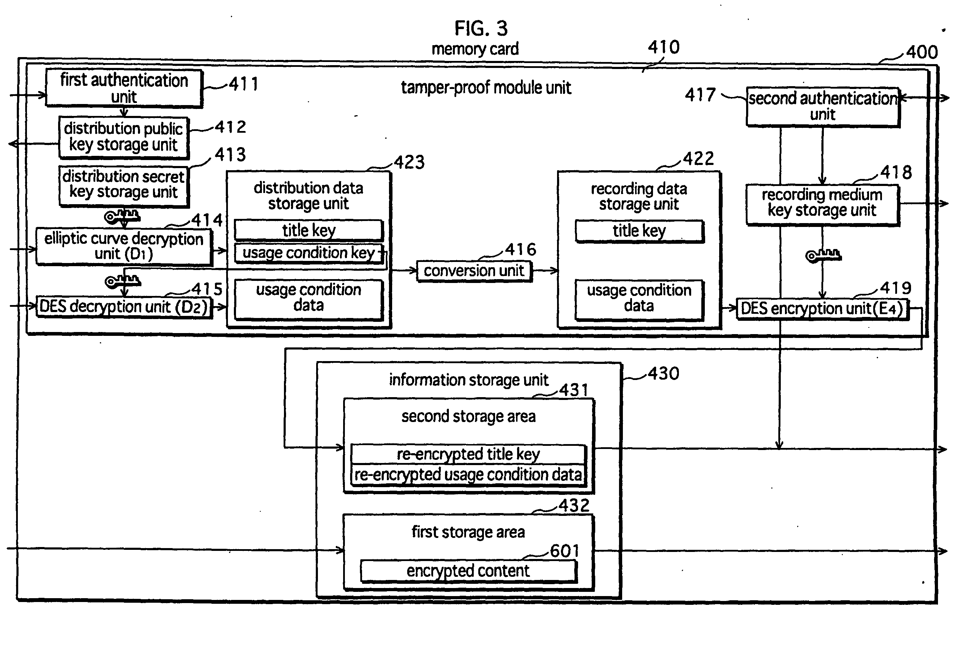

As shown in Fig. 3, the memory card 400 is composed of a tamper-proof module unit 410 and an information storage unit 430. The tamper-proof module unit 410 includes the first authentication unit 411, the distribution public key storage unit 412, a distribution secret key storage unit 413, the elliptic curve decryption unit 414, the DES decryption unit 415, a conversion unit 416, a second authentication unit 417, a recording medium apparatus key storage unit 418, a DES encryption unit 419, a distribution data storage unit 423, and a recording data storage unit 422. The information storage unit 430 includes the first storage area 432 and a second storage area 431. Here, the tamper-proof module unit 410 is composed of tamper-proof hardware, however a combination of tamper-proof hardware and tamper-proof software is also possible.

Furthermore, the tamper-proof module unit 410 is specifically composed of a microprocessor, a ROM, a RAM and so on. The RAM stores computer programs. The tamper-proof module unit 410 achieves its functions according to the microprocessor operating following the computer programs.

### (1) Distribution secret key storage unit 413

The distribution secret key storage unit 413 stores in advance a distribution secret key that is data of 160 bits in length.

### (2) Distribution public key storage unit 412

The distribution public key storage unit 412 stores in advance a distribution public key that is data of 320 bits in length. The distribution public key is generated by applying a public key generation algorithm according to the elliptic curve encryption method using the distribution secret key stored in the distribution secret key storage unit 413.

The distribution public key storage unit 412 receives the authentication success information from the first authentication unit 411.

On receiving the authentication success information, the distribution public key storage unit 412, in response to a request from the distribution public key obtaining unit 212 in the content distribution server apparatus 200, reads the distribution public key that it stores, and outputs the read distribution public key to the content distribution server apparatus 200 via the PC 300 and the Internet 10.

### (3) Recording medium apparatus key storage unit 418

The recording medium apparatus key storage unit 418 stores in advance a recording medium apparatus key that is unique to the memory card 400 and that is data of 56 bits in length.

### (4) Distribution data storage unit 423

The distribution data storage unit 423 has areas for storing each of the title key, the usage condition key, and the usage condition data.

### (5) Recording data storage unit 422

The recording data storage unit 422 has areas for storing each of the title key and the usage condition data.

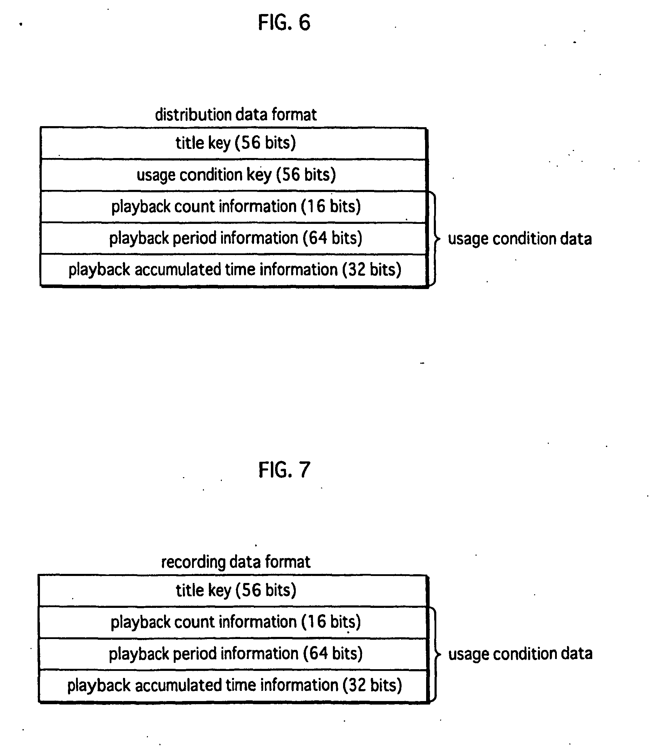

The format of the title key and the usage condition data, which are stored arranged in the stated order in the recording data storage unit 422, are shown in Fig. 7.

### (6) First storage area 432

The first storage area 432 has an area for storing encrypted content which it receives via the Internet 10 and the PC 300.

### (7) Second storage area 431

The second storage area 431 has areas for storing each of a re-encrypted title key and re-encrypted usage condition data.

The second storage area 431 receives the authentication success information from the second authentication unit 417. On receiving the authentication success information, the first authentication unit 431 reads and then outputs the re-encrypted title key and the re-encrypted usage condition information.

### (8) First authentication unit 411

The first authentication unit 411 performs challenge-response type mutual device authentication with the first authentication unit 211 of the content distribution server apparatus 200 via the PC 300 and the Internet 10. Specifically, the first authentication unit 411 is authenticated by the first authentication unit 211. Then, the first authentication unit 411 performs authentication of the first authentication unit 211. Mutual device authentication is considered to have succeed only when both authentications succeed.

When both authentications succeed, the first authentication unit 411 outputs authentication success information showing that authentication has succeeded to the distribution public key storage unit 412.

When authentication fails, the first authentication unit 411 aborts processing. Consequently, the content distribution server apparatus 200 does not write information to the memory card 400.

### (9) Elliptic curve decryption unit 414

The elliptic curve decryption unit 414 receives the encrypted combined information from the content distribution server apparatus via the Internet 10 and the PC 300. On receiving the encrypted combined information, the elliptic curve decryption unit 414 reads the distribution secret key from the distribution secret key storage unit 413, and applies a decryption algorithm D1 to the encrypted combined information according to the elliptic curve encryption method using the distribution secret key, to generate the title key and the usage condition key. Then, the elliptic curve decryption unit 414 writes the generated title key and usage condition key to the distribution data storage unit 423.

Here, the decryption algorithm D1 is an algorithm for performing conversion that is the inverse of the encryption algorithm E1.

### (10) DES decryption unit 415

The DES decryption unit 415 receives the encrypted usage condition data from the content distribution server apparatus 200 via the Internet 10 and the PC 300. On receiving the encrypted usage condition data, the DES decryption unit 415 reads the usage condition key from the distribution data storage unit 423. Then, the DES decryption unit 415 applies a decryption algorithm D2 to the encrypted usage condition data according to DES using the read usage condition key, to generate the usage condition data, and writes the generated usage condition data to the distribution data storage unit 423.

Here, the decryption algorithm D2 is an algorithm for performing conversion that is the inverse of the encryption algorithm E2.

### (11) Conversion unit 416

The conversion unit 416 reads the title key and the usage condition data from the distribution data storage unit 423, and writes the read title key and usage condition data to the recording data storage unit 422 in the stated order.

### (12) Second authentication unit 417

The second authentication unit 417 performs challenge-response type mutual device authentication with a second authentication unit 517 in the headphone stereo 500 (described later). Specifically, the second authentication unit 417 is authenticated by the second authentication unit 517. Then, the second authentication unit 417 authenticates the second authentication unit 517. Mutual device authentication is considered to have succeed only when both authentications succeed.

When both authentications succeed, the second authentication unit 417 outputs authentication success information showing that authentication has succeeded to the information storage unit 430.

When authentication fails, the second authentication unit 417 aborts processing. Consequently, information is not read from the memory card 400 by the headphone stereo 500.

### (13) DES encryption unit 419

The DES encryption unit 419 reads the title key and the usage condition data from the recording data storage unit 422, and the recording medium apparatus key from the recording medium apparatus key storage unit 418. Then, the DES encryption unit 419 applies an encryption algorithm E4 to the read title key and usage condition data respectively, according to DES using the read recording medium apparatus key, to generate a re-encrypted title key and re-encrypted usage condition data, and writes the generated re-encrypted title key and re-encrypted usage condition data to the second memory area 431.

### 1.4 Structure of the headphone stereo 500

As shown in Fig. 5, the headphone stereo 500 is composed of the second authentication unit 517, a recording medium apparatus key obtaining unit 518, a DES decryption unit 519, a re-encrypted data obtaining unit 531, a recording data storage unit 532, a usage condition judgement unit 540, a DES decryption unit 550, and a playback unit 541.

### (1) Recording data storage unit 532

The recording data storage unit 532 has areas for storing the title key and the usage condition data respectively.

### (2) Second authentication unit 517

The second authentication unit 517 performs challenge-response type mutual device authentication with the second authentication unit 417 in the memory card 400. Specifically, the second authentication unit 517 authenticates the second authentication unit 417. Then, the second authentication unit 517 is authenticated by the second authentication unit 417. Mutual device authentication is considered to have succeeded only when both authentications succeed.

When both authentications succeed, the second authentication unit 517 outputs authentication success information showing that authentication has succeeded to the recording medium apparatus key obtaining unit 518.

When authentication fails, the second authentication unit 517 aborts processing. Consequently, the headphone stereo 500 does not read information from the memory card 400.

### (3) Recording medium apparatus key obtaining unit 518

The recording medium apparatus key obtaining unit 518 receives the authentication success information from the second authentication unit 517. On receiving the authentication success information, the recording medium apparatus key obtaining unit 518 securely reads the recording medium apparatus key from the recording medium apparatus key storage unit 418 in the memory card 400, and outputs the read recording medium apparatus key to the DES decryption unit 519.

### (4) Re-encrypted data obtaining unit 531

The re-encrypted data obtaining unit 531 reads the re-encrypted title key and the re-encrypted usage condition data from the second storage area 431 of the memory card 400, and outputs the read re-encrypted title key and the re-encrypted usage condition data to the DES decryption unit 519.

### (5) DES decryption unit 519

The DES decryption unit 519 receives the recording medium apparatus key from the recording medium apparatus key obtaining unit 518, and the re-encrypted title key and the re-encrypted usage condition data from the re-encrypted data obtaining unit 531. Then, the DES decryption unit 519 applies a decryption algorithm D4 to the read re-encrypted title key and re-encrypted usage condition data respectively according to DES using the received recording medium apparatus key as the key, to generate the title key and the usage condition data, and writes the generated title key and usage condition data to the recording data storage unit 532.

Here, the decryption algorithm D4 is an algorithm for performing conversion that is the inverse of the encryption algorithm E4.

### (6) Usage condition judgement unit 540

The usage condition judgement unit 540 reads the usage condition data from the recording data storage unit 532, and uses the read usage condition data to judge whether playback of the content is permitted. Specifically, the usage condition judgement unit 540 permits playback if playing back the content will result in the content being played back a total number of times that is less than or equal to the number in the playback count information included in the usage condition data, and does not permit playback if playing back the content would result in the content being played back a total number of times that exceeds the number in the playback count information. Furthermore, the usage condition judgement unit 540 permits playback if it is during the period shown in the playback period information included in the usage condition data, and does not permit playback if it is not during the period in the playback period information. Furthermore, the usage condition judgement unit 540 permits playback if it is within the accumulated value shown by the playback accumulated time information included in the usage condition data, and does not permit playback if it is not within the accumulated value. When playback is permitted in all of the three conditions, the usage condition judgement unit 540 generates a judgement result showing that playback is possible. When playback is not permitted according to one of the conditions, the usage condition judgement unit 540 generates a judgement result showing the playback is not possible.

Next, the usage condition judgement unit 540 outputs the judgement result showing whether playback is possible or not to the playback unit 541.

### (7) DES decryption unit 550

The DES decryption unit 550 reads the title key from the recording data storage unit 532, and the encrypted content from the first storage area 432 of the memory card 400. Then the DES decryption unit 550 applies a decryption algorithm D3 to the read encrypted content according to DES using the read title key, to generate decrypted content, and outputs the decrypted content to the playback unit 541.

Here, the decryption algorithm D3 is an algorithm for performing conversion that is the inverse of the encryption algorithm E3.

### (8) Playback unit 541

The playback unit 541 receives the judgement result from the usage condition judgement unit 540, and the decrypted content from the DES decryption unit 550. When the received judgement result shows that playback is possible, the playback unit 541 plays back the received decrypted content.

If the received decrypted content is music, the playback unit 541 converts the decrypted content into an analog electric signal showing music, and outputs the analog electric signal to the headphones 700. The headphones 700 convert the received the analog signal to music, and output the music.

### 1.5 Operations of the digital work protection system 100

The following describes the operations of the digital work protection system 100.

### (1) Operations when writing to the memory card 400

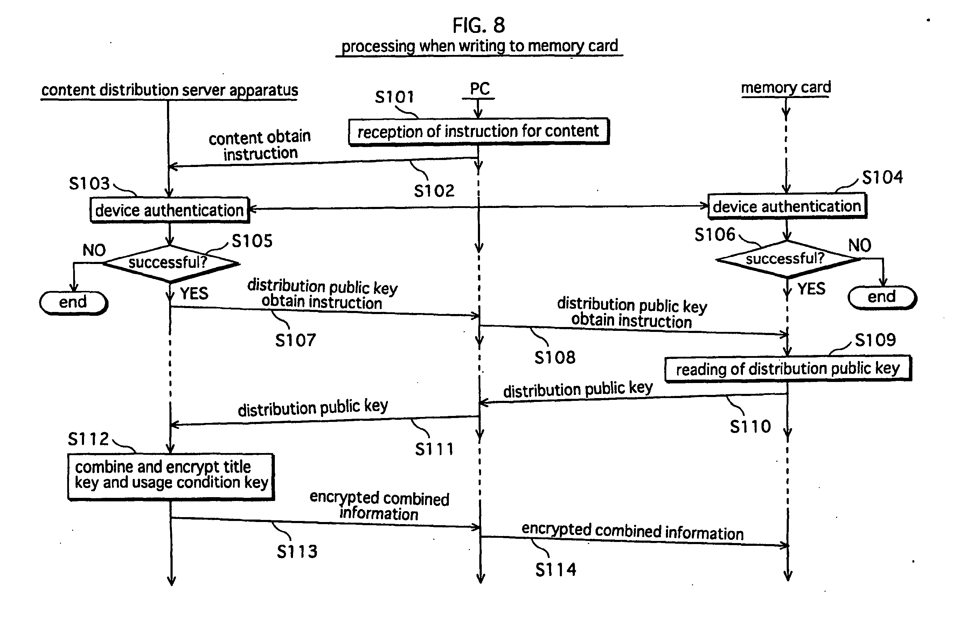

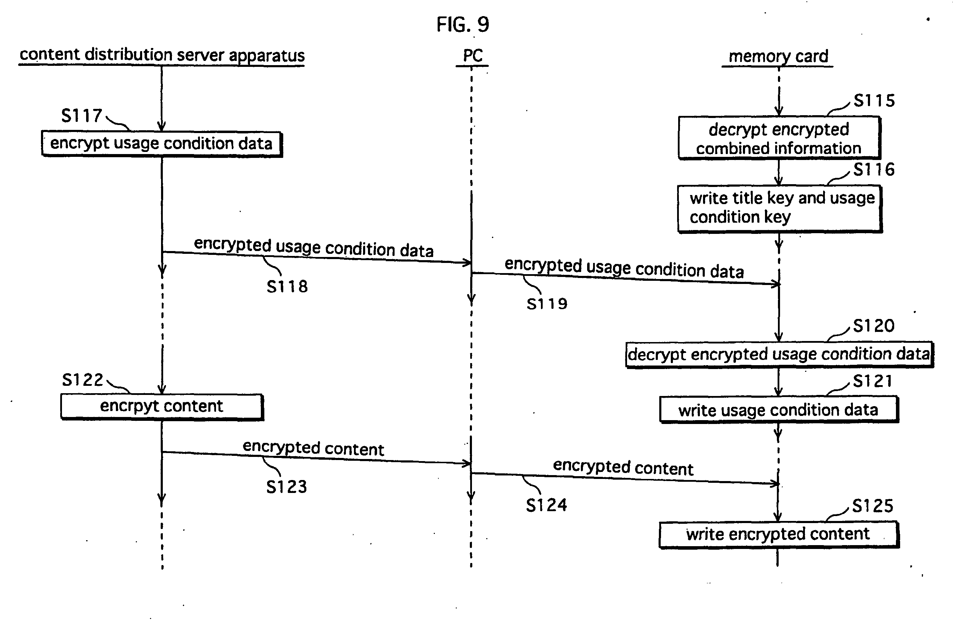

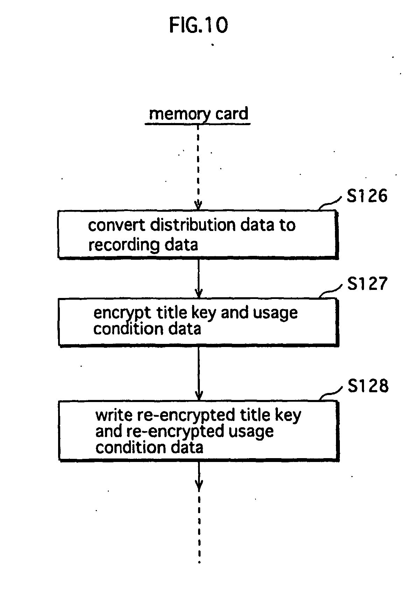

The following describes operations when the user inserts the memory card 400 into to PC 300 and purchases the content 600 stored in the content storage unit 201 of the content distribution server apparatus 200, with use of the flowcharts in Figs. 8 to 10.

The PC 300 receives designation of content from the user (step S101), and transmits an obtain instruction for the designated content via the Internet 10 to the content distribution server apparatus 200 (step S102).

On the content distribution server apparatus 200 receiving the obtain instruction (step S102), the first authentication unit 211 of the content distribution server apparatus 200 and the first authentication unit 411 of the memory card 400 perform mutual device authentication (step 103, step S104).

When authentication succeeds (step S105), the distribution public key obtaining unit 212 outputs a distribution public key obtain instruction to the distribution public key storage unit 412 of the memory card 400 via the Internet 10 and the PC 300 (step S107 to step S108).

When authentication succeeds (step S106), the distribution public key storage unit 412 receives the distribution public key obtain instruction (step S108), reads the distribution public key (step S109), and securely outputs the read distribution public key to the distribution public key obtaining unit 212 via the PC 300 and the Internet 10 (step S110 to step S111).

Next, the elliptic curve encryption unit 214 combines and then encrypts the title key and the usage condition key using the distribution public key as the key (step S112), and outputs the resulting encrypted combined information to the elliptic curve decryption unit 414 via the Internet 10 and the PC 300 (step S113 to step S114).

The elliptic curve decryption unit 414 decrypts the encrypted combined information (step S115), and writes the title key and the usage condition key to the distribution data storage unit 423 (step S116).

The DES encryption unit 215 encrypts the usage condition data (step S117), and outputs the encrypted usage condition data to the DES decryption unit 415 via the Internet 10 and the PC 300 (step S118, step S119).

The DES decryption unit 415 decrypts the encrypted usage condition data (step S120), and writes the usage condition data to the distribution data storage unit 423 (step S121).

The DES encryption unit 250 encrypts the content (step S122), and outputs the encrypted content to the first storage area 432 via the Internet 10 and the PC 300 (step S123 to step S124). The first storage area 432 stores the encrypted content (step S125).

The conversion unit 416 converts the distribution data stored in the distribution data storage unit 423, to generate recording data, and writes the generated recording data to the recording data storage unit 422 (step S126). Then, the DES encryption unit 419 encrypts respectively the title key and the usage condition data stored in the recording data storage unit 422 (step S127), and writes the re-encrypted title key and re-encrypted usage condition data to the second storage area 431 (step S128).

### (2) Operations when reading from the memory card 400

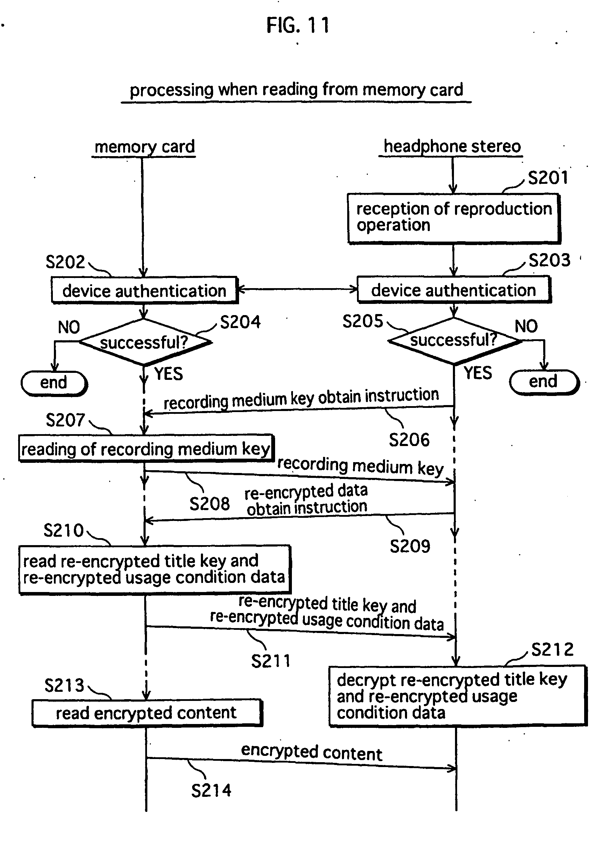

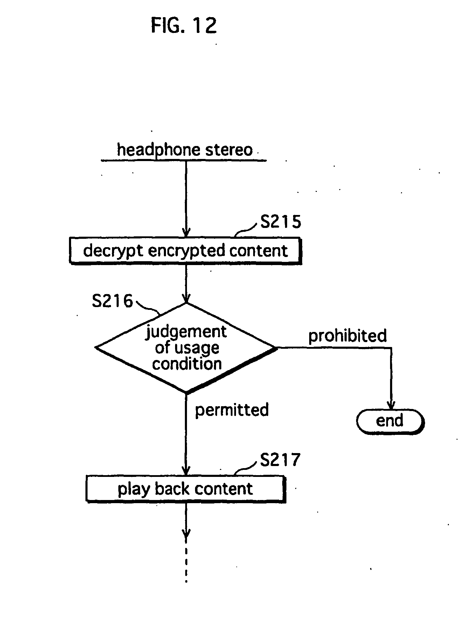

The following describes operations when the user removes the memory card 400 from the PC 300, inserts the memory card 400 in the headphone stereo 500, and has the content played back, with use of the flowcharts in Figs. 11 and 12.

On the receiving a content playback instruction from the user (step S201), the second authentication unit 517 of the headphone stereo 500 and the second authentication unit 417 of the memory card 400 perform mutual device authentication (step S202 and step S203).

When authentication succeeds (step S205), the recording medium apparatus key obtaining unit 518 outputs an instruction to obtain the recording medium apparatus key to the recording medium apparatus key storage unit 418 (step S206).

When authentication succeeds (step S204), the recording medium apparatus key storage unit 418 receives the instruction to obtain the recording medium apparatus key (step S206), reads the recording medium apparatus key (step S207), and outputs the read recording medium apparatus key to the recording medium apparatus key obtaining unit 518 (step S208).

The re-encrypted data obtaining unit 531 outputs an instruction to obtain re-encrypted data to the second storage area 431 (step S209). The second storage area 431 reads the re-encrypted title key and the re-encrypted usage condition data (step S210), and outputs the read re-encrypted title key and the re-encrypted usage condition data to the re-encrypted data obtaining unit 531 (step S211) . Then, the DES decryption unit 519 decrypts the re-encrypted title key and the re-encrypted usage condition data, and writes the resulting title key and usage condition data to the recording data storage unit 532 (step S212).

The first storage are 432 reads the encrypted content (step S213), and outputs the read encrypted content to the DES decryption unit 550 (step S214). The DES decryption unit 550 decrypts the encrypted content (step S215).

The usage condition judgment unit 540 reads the usage condition data from the recording information storage unit 532, and judges according to the read usage condition data whether playback of the content is permitted or not (step S216). When playback is permitted (step S216), the playback unit 541 decrypts the encrypted content, and plays back the decrypted content (step S217).

### 1.6 Conclusion

As has been described, by performing decryption and re-encryption (decryption conversion) of the encrypted title key and usage condition data in the tamper-proof module unit of the recording medium apparatus, hacking by a dishonest third party is made difficult.

### 2. Second Embodiment

The following describes a digital work protection system 100b (not illustrated) as another embodiment of the present invention.

The digital work protection system 100b has the same construction as the digital work protection system 100, except that the digital work protection system 100b has a content distribution server apparatus 200b instead of the content distribution server apparatus 200, and a memory card 400b instead of the memory card 400. The following description focuses on the characteristics unique to the digital work protection system 100b.

### 2.1 Content distribution server apparatus 200b

The content distribution server apparatus 200b has a similar structure to the content server apparatus 200, and is composed of the first authentication unit 211, the distribution public key obtaining unit 212, the distribution data storage unit 202, the elliptic curve encryption unit 214, a hash unit 220, the content storage unit 201, the DES encryption unit 250, and a writing unit 221. The following description focuses on the characteristics unique to the content distribution server apparatus 200b.

### (1) Distribution data storage unit 202

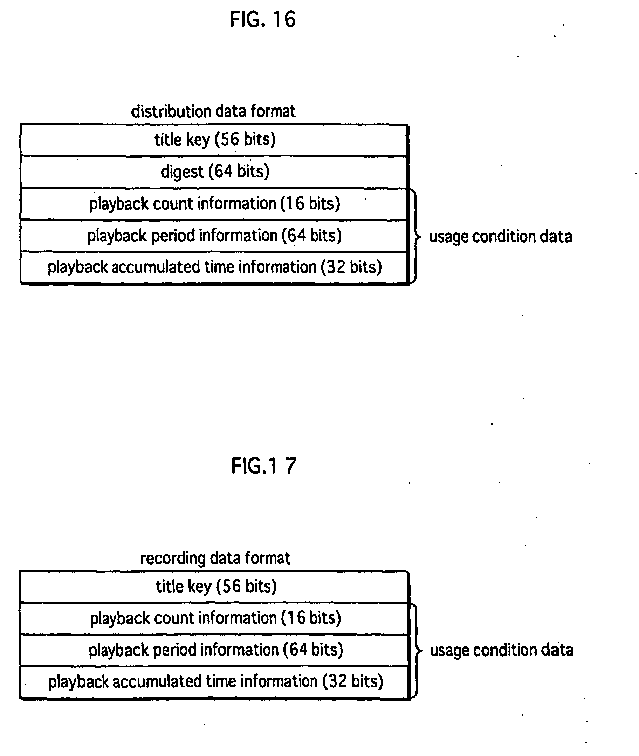

As shown in Fig. 16, the distribution data storage unit 202 is composed of areas for storing each of a title key, a digest, and usage condition data. The title key and the usage condition data are stored in advance. The title key, the digest, and the usage condition data correspond to the content 600 stored by the content storage unit 200.

Since the title key and the usage condition information were described earlier, a description thereof is omitted here.

The digest is a value obtained by applying a hash function to the usage condition data. The digest is written to the distribution data storage unit 202 by the hash unit 220.

### (2) First authentication unit 211

The first authentication unit 211 outputs the authentication success information showing that authentication has been successful to the distribution public key obtaining unit 212 and the elliptic curve unit 214.

### (3) Hash unit 220

The hash unit 220 reads the usage condition data from the distribution data storage unit 202, applies a hash function F1 to the read usage condition data, to generate a digest, and writes the generated digest to the distribution data storage unit 202.

Here, a United States standard SHA algorithm or the like can be used for the hash function F1. Details of SHA algorithms can be found, for example, in *Ango Riron Nyumon* (*Introduction to Cryptology*), Eiji Okamoto, Kyoritsu Shuppan Co., Ltd., 1993.

### (4) Elliptic curve encryption unit 214

The elliptic curve encryption unit 214 reads the title key and the digest from the distribution data storage unit 202, then applies an encryption algorithm E1 according to the elliptic curve encryption method to combined information using the received distribution public key, to generate encrypted combined information. Here, the combined information is the title key and the digest combined.

### (5) Writing unit 221

The writing unit 221 reads the usage condition information from the distribution data storage unit 202, and writes the read usage condition data to the distribution data storage unit 423 via the Internet 10 and the PC 300.

### 2.2 Memory card 400b

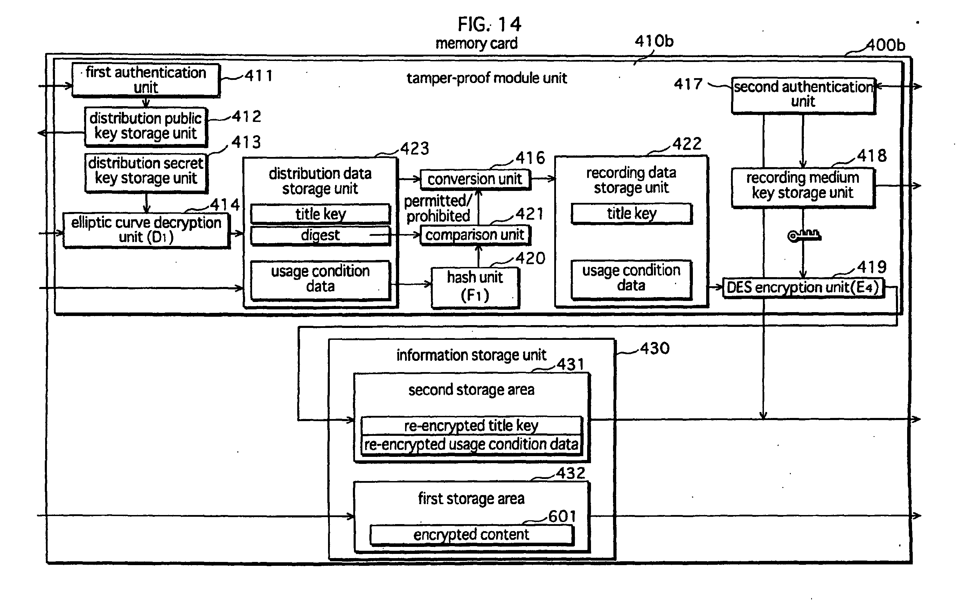

The memory card 400b has a similar construction to the memory card 400, and, as shown in Fig. 14, is composed of a tamper-proof module 410b that cannot be read from or written to from outside, and an information storage unit 430. The tamper-proof module 410b is composed of the first authentication unit 411, the distribution public key storage unit 412, the distribution secret key storage unit 413, the elliptic curve decryption unit 414, the conversion unit 416, the second authentication unit 417, the recording medium apparatus key storage unit 418, the DES encryption unit 419, a hash unit 420, a comparison unit 421, the distribution data storage unit 423, and the recording data storage unit 422. The following description focuses on the characteristics unique to the memory card 400b.

### (1) Elliptic curve decryption unit 414

The elliptic curve decryption unit 414 applies a decryption algorithm D1 according to the elliptic curve encryption method to the received encrypted combined information using the read distribution secret key, to generate the title key and the digest, and writes the generated title key and digest to the distribution data storage unit 423.

### (2) Hash unit 420

The hash unit 420 reads the usage condition data from the distribution data storage unit 423, applies the hash function F1 to the read usage condition data, to generate a digest, and outputs the generated digest to the comparison unit 421.

Here, the hash function F1 is the same as the hash function F1 used by the hash unit 220 of the content distribution server apparatus 200b.

### (3) Comparison unit 421

The comparison unit 421 reads the digest from the distribution data storage unit 423, and receives the digest from the hash unit 420. Then, the comparison unit 421 judges whether the read digest and the received digest match or not, and outputs judgement information showing whether the digests match or not to the conversion unit 416.

### (4) Conversion unit 416

The conversion unit 416 receives the judgement information from the comparison unit 421.

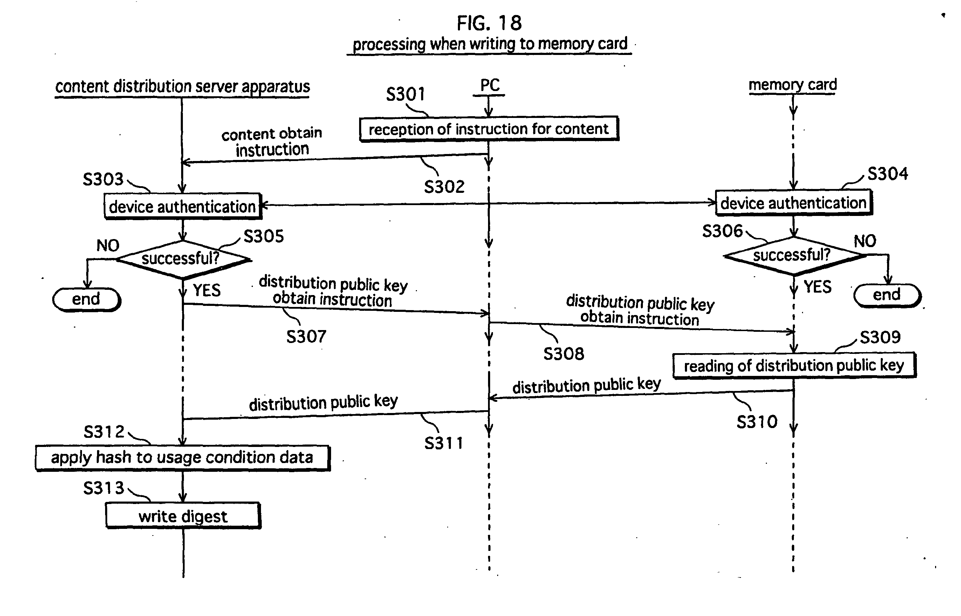

When the judgement information shows that the digests match, the conversion unit 416 reads the title key and the usage condition data from the distribution storage unit 423, and writes the read title key and usage condition data to the recording data storage unit 422 in the stated order. The title key and usage condition data written to recording data storage unit 422 are shown in Fig. 17.

When the judgement information shows that the digests do not match, the conversion unit 416 does nothing. Consequently, the title key and the usage condition data are not written to the recording data storage unit 422.

### 2.3 Construction of the headphone stereo 500

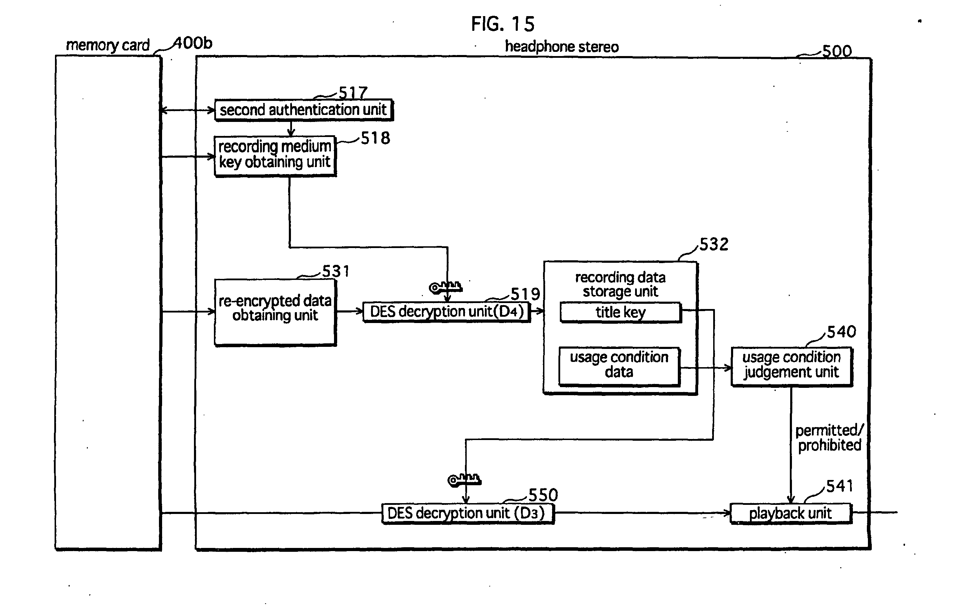

As shown in Fig. 15, the headphone stereo 500 is composed of the second authentication unit 517, the recording medium apparatus key obtaining unit 518, the DES decryption unit 519, the re-encrypted data obtaining unit 531, the recording data storage unit 532, the usage condition judgement unit 540, the DES decryption unit 550, and the playback unit 541. This is the same construction as the headphone stereo in the digital work protection system 100, and thus a description thereof is omitted.

### 2.4 Operations of the digital work protection system 100b

The following describes operations of the digital work protection system 100b.

### (1) Operations when writing to the memory card 400b

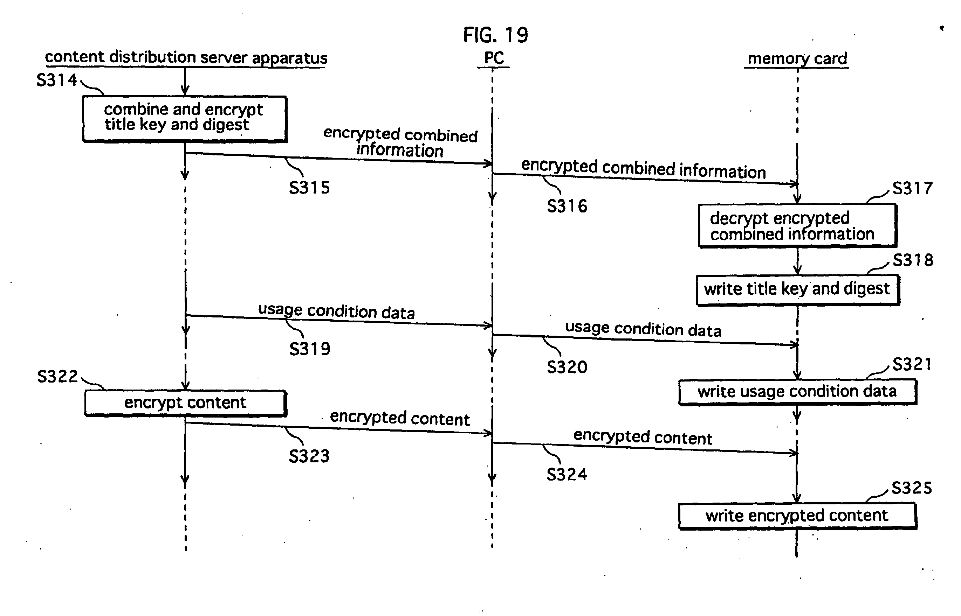

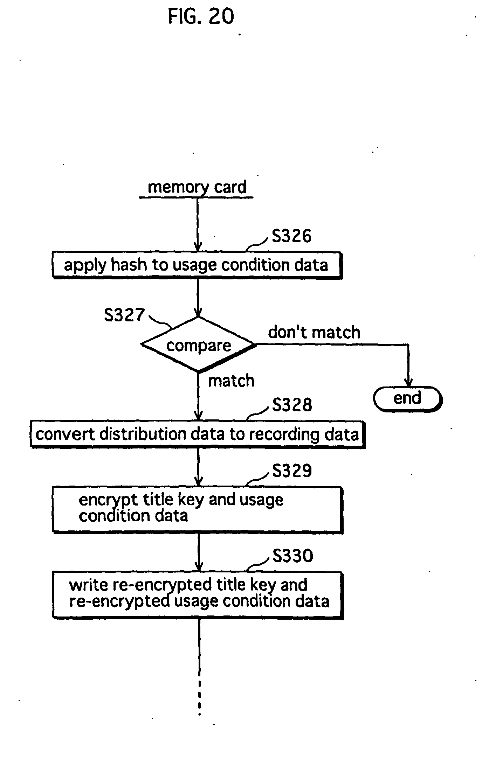

The following describes operations when the user inserts the memory card 400b into to PC 300 and purchases the content 600 stored in the content storage unit 201 of the content distribution server apparatus 200b, with use of the flowcharts in Figs. 18 to 20.

The PC 300 receives designation of content from the user (step S301), and transmits an obtain instruction for the designated content via the Internet 10 to the content distribution server apparatus 200b (step S302).

On the content distribution server apparatus 200b receiving the obtain instruction (step S302), the first authentication unit 211 of the content distribution server apparatus 200b and the first authentication unit 411 of the memory card 400b perform mutual device authentication (step 303, step S304).

When authentication succeeds (step S305), the distribution public key obtaining unit 212 outputs a distribution public key obtain instruction to the distribution public key storage unit 412 of the memory card 400b via the Internet 10 and the PC 300 (step S307 to step S308).

When authentication succeeds (step S306), the distribution public key storage unit 412 receives the distribution public key obtain instruction (step S308), reads the distribution public key (step S309), and outputs the read distribution public key to the distribution public key obtaining unit 212 via the PC 300 and the Internet 10 (step S310 to step S311).

Next, the hash unit 220 reads the usage condition data, applies the has function F1 to the read usage condition data, to generate a digest (step S312), and writes the generated digest to the distribution data storage unit 202 (step S313).

Next, the elliptic curve encryption unit 214 combines and then encrypts the title key and the usage using the distribution public key as the key (step S314), and outputs the resulting encrypted combined information to the elliptic curve decryption unit 414 via the Internet 10 and the PC 300 (step S315 to step S316).

The elliptic curve decryption unit 414 decrypts the encrypted combined information (step S317), and writes the title key and the digest to the distribution data storage unit 423 (step S318).

The writing unit 221 reads the usage condition data, and writes the read usage condition data to the distribution data storage unit 423 via the Internet 10 and the PC 300 (step S319 to step S320).

The DES encryption unit 250 encrypts the content (step S322), and outputs the encrypted content to the first storage area 432 via the Internet 10 and the PC 300 (step S323 to step S324). The first storage area 432 stores the encrypted content (step S325).

Next, the hash unit 420 reads the usage condition data from the distribution data storage unit 423, applies the hash function F1 to the read usage condition data, to generate a digest, and outputs the generated digest to the comparison unit 421 (step S326). Then, the comparison unit 421 reads the digest from the distribution data storage unit 423 and receives the digest from the hash unit 420, judges whether the read digest and the received digest match or not, and outputs judgement information showing whether the digests match or not to the conversion unit 416. The conversion unit 416 receives the judgement information from the comparison unit 421. When the judgement information shows that the digests match (step S327), the conversion unit 416 reads the title key and the usage condition data from the distribution storage unit 423, and writes the read title key and usage condition data to the recording data storage unit 422 in the stated order (step S328). Then, the DES encryption unit 419 encrypts the title key and the usage condition data stored in the recording data storage unit 422 (step S329), and writes the re-encrypted title key and the re-encrypted usage condition data to the second storage area 431 (step S330).

When the judgement information shows that the digests do not match (Step S327), the conversion unit 416 does nothing, and the processing ends.

### (2) Operations when reading from the memory card 400b

Operations when the user removes the memory card 400b from the PC 300, inserts the memory card 400b in the headphone stereo 500, and plays back the content are the same as the operations shown in the flowcharts in Figs. 11 and 12 and thus a description thereof is omitted here.

### 2.5 Conclusion

As has been described, by performing decryption and re-encryption (decryption conversion) of the encrypted title key and usage condition data in the tamper-proof module unit of the recording medium apparatus, hacking by a dishonest third party is made difficult.

### 3. Third Embodiment

The following describes a digital work protection system 100c (not illustrated) as yet another embodiment of the present invention.

The digital work protection system 100c has the same construction as the digital work protection system 100, except that the digital work protection system 100c has a content distribution server apparatus 200c instead of the content distribution server apparatus 200, and a memory card 400c instead of the memory card 400. The following description focuses on the characteristics unique to the digital work protection system 100c.

### 3.1 Content distribution server apparatus 200c

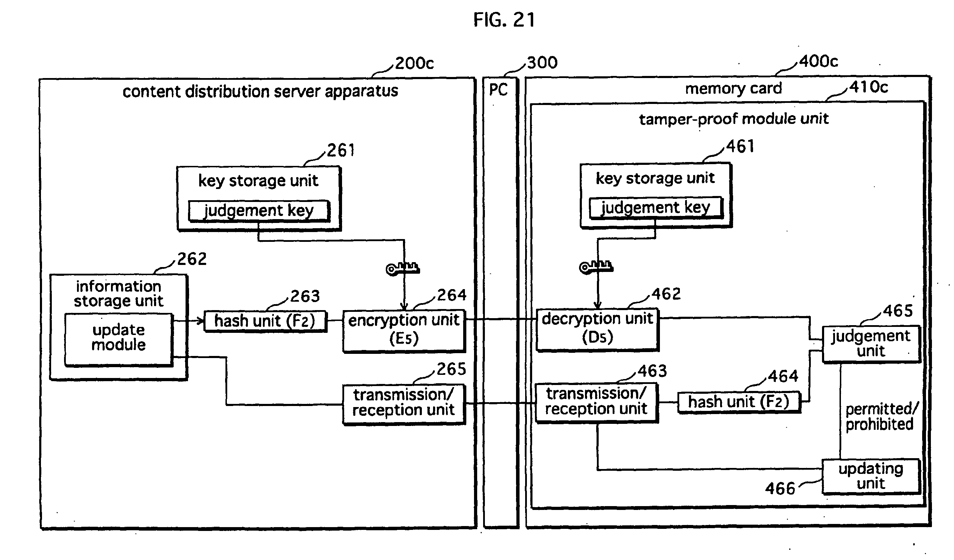

The content distribution server apparatus 200c, in addition to the constituent elements of the content distribution server apparatus 200, includes, as shown in Fig. 21, a key storage unit 261, an information storage unit 262, a hash unit 263, an encryption unit 264, and a transmission/reception unit 265.

### (1) Information storage unit 262

The information storage unit 262 stores an update module in advance.

The update module is information for updating computer programs, data, and the like included in the tamper-proof module unit of the memory card. Specifically, the update module is for updating the encryption method, decryption method, and conversion method included in the tamper-proof module.

### (2) Key storage unit 261

The key storage unit 261 stores a judgement key in advance. The judgement key is information that is 64 bits in length.

### (3) Hash unit 263

The hash unit 263 reads the update module from the information storage unit 262, applies a hash function F2 to the read update module to generate a first hash value, and outputs the generated first hash value to the encryption unit 264.

### (4) Encryption unit 264

The encryption unit 264 reads the judgement key from the key storage unit 261, and receives the first hash value from the hash unit 263. Then, the encryption unit 264 applies an encryption algorithm E5 to the received first hash value using the read judgement key, to generate and encrypted hash value, and transmits the generated encrypted hash value to a decryption unit 462 (described later) of the memory card 400c via the Internet 10 and the PC 300.

### (5) Transmission/reception unit 265

The transmission/reception unit 265 reads the update module from the information storage unit 262, and transmits the read module to a transmission/reception unit 463 (described later) of the memory card 400c via the Internet 10 and the PC 300.

### 3.2 Memory card 400c

The memory card 400c includes a tamper-proof module unit 410c instead of the tamper-proof module unit 410.

The tamper-proof module unit 410c, in addition to the compositional elements of the tamper-proof module unit 410, includes a key storage unit 461, the decryption unit 462, the transmission/reception unit 463, a hash unit 464, a judgement unit 465, and an updating unit 466.

### (1) Key storage unit 461

The key storage unit 461 stores a judgement key in advance. The judgement key is information that is 64 bits in length, and is the same as the judgement key stored by the key storage unit 261.

### (2) Decryption unit 462

The decryption unit 462 receives the encrypted hash value from the content distribution server apparatus 200c via the Internet 10 and the PC 300, and reads the judgement key from the key storage unit 461. Then, the decryption unit 462 applies a decryption algorithm D5 to the received encrypted hash value using the read judgement key, to generate a first hash value, and outputs the generated first hash value to the judgement unit 465.

Here, the decryption algorithm D5 is an algorithm for performing the conversion that is the inverse of the encryption algorithm E5.

### (3) Transmission/reception unit 463

The transmission/reception unit 463 receives the update module from the content distribution server apparatus 200c via the Internet 10 and the PC 30, and outputs the received update module to the hash unit 464 and the updating unit 466.

### (4) Hash unit 464

The hash unit 464 receives the update module from the transmission unit 463, applies the hash function F2 to the received update module to generate a second hash value, and outputs the generated hash value to the judgement unit 465.

### (5) Judgement unit 465

The judgement unit 465 receives the first hash value from the decryption unit 462, and receives the second hash value from the hash unit 464. Then, the judgement unit 465 judges whether the received first hash value and the received second hash value match or not, and outputs judgement information showing whether the two hash values match or not to the updating unit 466.

### (6) Updating unit 466

The updating unit 466 receives the update module from the transmission/reception unit 463, and receives the judgement information from the judgement unit 465.

When the judgement information shows that the two hash values match, the updating unit 466 updates the computer program or the data stored in the tamper-proof module unit 410c, using the received update module.

### 3.3 Operations of the digital work protection system 100c

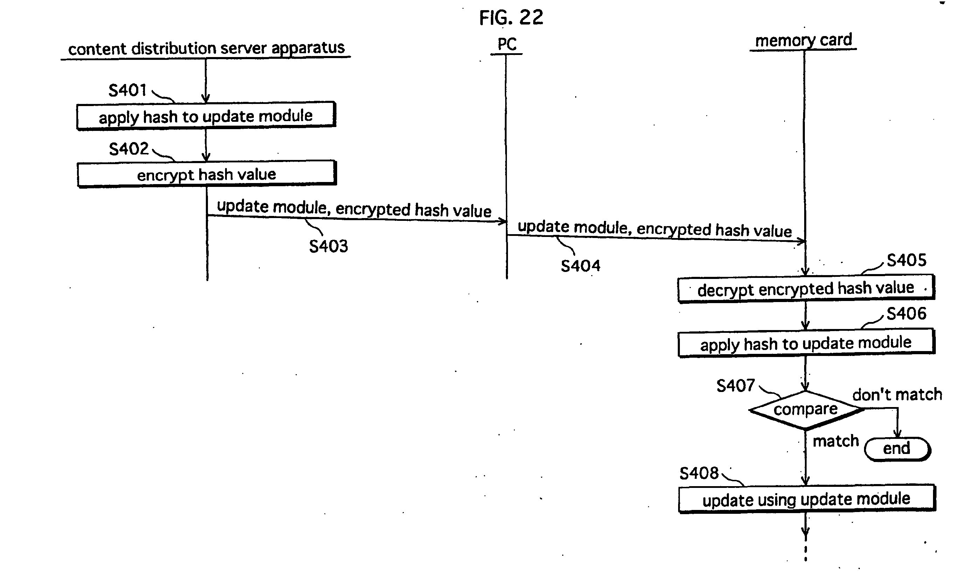

The following describes the operations in the digital work protection system 100c when a computer program or data included in the tamper-proof module 410c of the memory card 400c is updated, with use of the flowchart in Fig. 22.

In the content distribution server apparatus 200c, the hash unit 263 reads the update module from the information storage unit 262, applies a hash function F2 to the read update module to generate a first hash value, and outputs the generated first hash value to the encryption unit 264 (step S401). The encryption unit 264 reads the judgement key from the key storage unit 261, receives the first hash value from the hash unit 263, applies an encryption algorithm E5 to the received first hash value using the read judgement key, to generate an encrypted hash value (step S402). Then, the encryption unit 264 transmits the generated encrypted hash value to the decryption unit 462 of the memory card 400c via the Internet 10 and the PC 300. The transmission/reception unit 265 reads the update module from the information storage unit 262, and transmits the read module to the transmission/reception unit 463 of the memory card 400c via the Internet 10 and the PC 300 (step S403, step S404).

In the memory card 400c, the decryption unit 462 receives the encrypted hash value from the content distribution server apparatus 200c via the Internet 10 and the PC 300, and the transmission/reception unit 463 receives the update module from the content distribution server apparatus 200c via the Internet 10 and the PC 300 (step S403, step S404). Next, the decryption unit 462 reads the judgement key from the key storage unit 461, applies a decryption algorithm D5 to the received hash value, using the read judgement key, to generate a first hash value, and outputs the generated first hash value to the judgement unit 465 (step S405). Then, the hash unit 464 receives the update module from the transmission/reception unit 463, applies the hash function F2 to the received update module to generate a second hash value, and outputs the generated hash value to the judgement unit 465 (step S406). The judgement unit 465 judges whether the received first hash value and the received second hash value match or not, and outputs judgement information showing whether the two hash values match or not to the updating unit 466. When the judgement information shows that the two hash values match (step S407), the updating unit 466 updates the computer program or the data stored in the tamper-proof module unit 410c, using the received update module (step S408).

When the received judgement information shows that the two hash values do not match (step S407), the updating unit 466 does nothing, and the processing ends.

### 3.6 Conclusion

A conventional system uses a predetermined distribution data format and a predetermined distribution encryption method to encrypt the title key and the usage condition data, and after decrypting the encrypted title key and usage condition data in the user's computer, re-encrypts the title key and usage condition data and records the re-encrypted title key and usage condition data to a recording medium apparatus using a predetermined recording data format and predetermined recording encryption method.

However, when encryption conversion and data format conversion that conventionally are performed in the computer are performed in the tamper-proof modules of the recording medium apparatus, the tamper-proof modules cannot be easily made to treat content that is later generated in compliance with a different distribution encryption method and distribution data format.

In response to this it is an object of the present invention to provide a digital work protection system, a recording medium apparatus, server apparatus, and playback apparatus that enable safe updating of a tamper-proof module that performs encryption conversion and format conversion in the recording medium apparatus.

### 4. Gist of the application on which this application is based

As has been explained, the present invention is a digital work protection system that treats content that is a digital work. The digital work protection system is composed of a server apparatus, a recording medium apparatus, and a playback apparatus. The server apparatus includes a first encryption unit for encrypting the content in a manner unique to the content to generate encrypted content; and a second encryption unit for, in compliance with a predetermined distribution data format, encrypting usage condition data that expresses conditions for using the content, in a manner unique to the recording medium apparatus, to generate encrypted usage data. The recording medium apparatus includes an obtaining unit for obtaining the encrypted content and the encrypted usage data from the server apparatus; a first storage area for storing the encrypted content obtained by the obtaining unit; a second decryption unit that corresponds to the second encryption unit, and that is for decrypting the encrypted usage condition data obtained by the obtaining unit; a data format conversion unit for converting the usage condition information decrypted by the second decryption unit, from the distribution data format into a predetermined recording data format; a third encryption unit for encrypting the usage data converted by the data format conversion unit, in a manner unique to the recording medium apparatus, to generate re-encrypted usage condition data; and a second storage area for storing the re-encrypted usage condition data. Here, the second decryption unit, the data format conversion unit and the third encryption unit are tamper-proof modules. The playback apparatus includes a reading unit for reading the encrypted content from the first storage area of the recording medium apparatus, and the re-encrypted usage condition data from the second storage area of the recording medium apparatus; a third decryption unit that corresponds to the third encryption unit, and that is for decrypting the re-encrypted usage condition information read by the reading unit; a first decryption unit that corresponds to the first encryption unit, and that is for decrypting the encrypted content read by the reading unit; and a playback unit for reproducing the content decrypted by the first decryption unit, within a scope permitted by the usage condition data decrypted by the third decryption unit.

Here, the server apparatus further includes a distribution public key obtaining unit for securely obtaining a distribution public key that corresponds to a distribution secret key that is stored in a distribution secret key storage area of the recording medium apparatus and that is unique to the recording medium apparatus. The first encryption unit further encrypts content according to a common key encryption method, using a title key unique to the content, to generate encrypted content; the second encryption unit encrypts the title key and the usage condition data according to a public key encryption method, using the distribution public key obtained by the distribution public key obtaining unit, to generate an encrypted title key and encrypted usage condition data. The recording medium apparatus further includes the distribution secret key storage area for storing the distribution secret key that corresponds to the distribution public key; and a recording medium apparatus unique key storage area for storing the recording medium apparatus unique key that is unique to the recording medium apparatus. The obtaining unit obtains the encrypted content, the encrypted title key and the encrypted usage data from the server apparatus; the second decryption unit decrypts the encrypted title key and the encrypted usage information according to the public key encryption method, using the distribution secret key stored in the distribution secret key storage area. The third encryption unit encrypts the decrypted title key and usage condition data according to the common key encryption method, using the recording medium apparatus unique key stored in the recording medium apparatus unique key storage area, to generate a re-encrypted title key and re-encrypted usage condition data; and in addition to the second decryption unit, the data format conversion unit and the third encryption unit, the distribution secret key storage area and the recording medium apparatus unique key storage area are also tamper-proof modules. The playback apparatus further includes a recording medium apparatus unique key obtaining unit for securely obtaining the recording medium apparatus unique key stored in the recording medium apparatus unique key storage area of the recording medium apparatus. Here, the reading unit reads the re-encrypted title key and the re-encrypted usage condition data from the recording medium apparatus. The third decryption unit decrypts the re-encrypted title key and the re-encrypted usage condition data read by the reading unit, with the recording medium apparatus unique key, according to the common key encryption method. The first decryption unit decrypts the encrypted content, using the title key, according to the common encryption method, and the playback unit plays back the decrypted content within a scope permitted by the usage condition data.

Here, the second encryption unit in the server apparatus encrypts the title key and usage condition related information according to the public key encryption method, using the distribution public key, to generate an encrypted title key and encrypted usage condition related information. Here, the usage condition related information includes at least one of (a) a usage condition data digest value, and (b) a usage condition key used in encryption and decryption of the usage condition data. When the usage condition related information includes the usage condition data digest value, the second encryption unit generates the usage condition data digest value by applying a hash function to the usage condition data. When the usage condition related information includes the usage condition key, the second encryption unit encrypts the usage condition data according to a common key encryption method, using the usage condition key. The obtaining unit in the recording medium apparatus obtains the encrypted title key and the encrypted usage condition related information from the server apparatus. When the usage condition related information includes only the usage condition data digest value, the obtaining unit further obtains the usage condition data. When the usage condition related information includes the usage condition key, the obtaining unit obtains the encrypted usage condition data. The second decryption unit decrypts the encrypted title key and the encrypted usage condition related information according to the public key encryption method, using the distribution secret key. When the decrypted usage condition related information includes the usage condition key, the second decryption unit decrypts the encrypted usage condition data according to the common key method, using the usage condition key, to obtain usage condition data. When the usage condition related information includes the usage condition data digest value, the second decryption unit applies the hash function to the usage condition data to generate a usage condition data reference value, and judges whether the reference value and the usage condition data digest value included in the usage condition related information match.

Here, the recording medium apparatus and the server apparatus each further respectively include a first authentication unit. Before the server apparatus obtains the distribution public key from the recording medium apparatus, or before the recording medium apparatus obtains the encrypted title key and the encrypted usage condition data from the server apparatus, the first authentication unit of the server apparatus authenticates the recording medium apparatus, and the first authentication unit of the recording medium apparatus authenticates the server apparatus. When both authentications succeed, the server apparatus obtains the distribution public key from the recording medium apparatus, or the recording medium apparatus obtains the encrypted title key and the encrypted usage condition data.

Here, the recording medium apparatus and the playback apparatus each further respectively include a second authentication unit. Before the playback apparatus obtains the medium unique key from the recording medium apparatus, or before the recording medium apparatus reads the encrypted title key and the encrypted usage condition data from the playback apparatus, the second authentication unit of the playback apparatus authenticates the recording medium apparatus, and the second authentication unit of the recording medium apparatus authenticates the playback apparatus. When both authentications succeed, the recording medium apparatus obtains the medium authentic key from the recording medium apparatus, or the playback apparatus reads the encrypted usage condition data from the recording medium apparatus.

Here, when the distribution secret key of the recording medium apparatus is exposed, the server apparatus registers the distribution public key corresponding to the distribution secret key on a revoke list, and prohibits encrypting of the tile key and the usage condition data encrypted using the registered distribution public key, and provision thereof to the recording medium apparatus.

Here, the usage condition data includes information for controlling the number of times the content is played back, information for controlling a period in which the content is played back, or information for controlling the accumulated playback time of the content.

Here, the tamper-proof modules may be composed of tamper-proof hardware or tamper-proof software, or a combination of both.

Furthermore, the present invention is a recording medium apparatus for recording content that is a digital work, including: an obtaining unit for obtaining encrypted content and encrypted usage condition data; a first storage area for storing the obtained encrypted content; a second decryption unit for decrypting the obtained encrypted usage condition data; a data format conversion unit for converting the decrypted usage condition data from a predetermined distribution data format to a predetermined recording data format; a third encryption unit for encrypting the converted decrypted usage condition data in a manner unique to the recording medium apparatus, to generate re-encrypted usage condition data; and a second storage area for storing the re-encrypted usage condition data. Here, the second decryption unit, the data format conversion unit and the third encryption unit are tamper-proof modules.

Here, the recording medium apparatus further includes a distribution secret key storage area for storing a distribution secret key that corresponds to the distribution public key; and a recording medium apparatus unique key storage area for storing the recording medium apparatus unique key that is unique to the recording medium apparatus. The obtaining unit obtains the encrypted content, the encrypted title key and the encrypted usage data from the server apparatus. The second decryption unit decrypts the encrypted title key and the encrypted usage information according to the public key encryption method, using the distribution secret key stored in the distribution secret key storage area. The third encryption unit encrypts the decrypted title key and usage condition data according to the common key encryption method, using the recording medium apparatus unique key stored in the recording medium apparatus unique key storage area, to generate a re-encrypted title key and re-encrypted usage condition data. In addition to the second decryption unit, the data format conversion unit and the third encryption unit, the distribution secret key storage area and the recording medium apparatus unique key storage area are also tamper-proof modules.

Here, the obtaining unit of the recording medium apparatus obtains the encrypted title key and the encrypted usage condition related information from the server apparatus. When the usage condition related information includes only the usage condition data digest value, the obtaining unit further obtains the usage condition data. When the usage condition related information includes the usage condition key, the obtaining unit obtains the encrypted usage condition data, and the second decryption unit decrypts the encrypted title key and the encrypted usage condition related information according to the public key encryption method, using the distribution secret key. When the usage condition key is included in the decrypted usage condition related information, the second decryption unit decrypts the encrypted usage condition data according to the common key method, using the usage condition key, to obtain the usage condition data. When the usage condition data digest value is included in the usage condition related information, the second decryption unit applies the hash function to the usage condition data to generate a usage condition data reference digest value, and judges whether the reference digest value matches the usage condition data digest value included in the usage condition related information.

Here, the recording medium apparatus further includes a first authentication unit and a second authentication unit. Before the distribution public key is obtained by the server apparatus, or before the recording medium obtains the encrypted title key and the encrypted usage condition data from the server apparatus, the first authentication unit of the server apparatus authenticates the recording medium apparatus, and the first authentication unit of the recording medium apparatus authenticates the server apparatus. When both authentications succeed, the distribution public key is obtained by the server apparatus from the recording medium apparatus, or the recording medium apparatus obtains the encrypted title key and the encrypted usage condition data. Before the medium unique key is obtained by the playback apparatus from the recording medium apparatus, or before the encrypted title key and the encrypted usage condition information are read from the recording medium apparatus by the playback apparatus, the second authentication unit of the playback apparatus authenticates the recording medium apparatus, and the second authentication unit of the recording medium apparatus authenticates the playback apparatus. When both authentications succeed, the medium unique key is obtained by the playback apparatus, or the encrypted usage condition related information is read from the recording medium apparatus.

Here, when there is a change in the distribution data format or the recording data format, the tamper-proof module that is the data format conversion unit of the recording medium apparatus is updated.

Here, when there is a change in the encryption method used by the second decryption unit or the encryption method used by the third encryption unit of the recording medium apparatus, the tamper-proof module that is the second decryption unit or the third encryption unit is updated.

Here, the recording medium apparatus further includes a tamper-proof module judgement unit for judging the authenticity of a tamper-proof module to be updated. When the tamper-proof module unit judges a tamper-proof module to be authentic, the tamper-proof module is updated.

Here, the second decryption unit of the recording medium apparatus is made able to select for decryption an encryption method from amongst a plurality of encryption methods, and the third encryption unit selects one encryption method from amongst the plurality of encryption methods.

Here, the distribution key storage area of the recording medium apparatus stores a plurality of distribution secret keys, and the second decryption unit selects for use one of the plurality of distribution secret keys.

Here, the tamper-proof modules may be composed of tamper-proof hardware or tamper-proof software, or a combination of both.

Furthermore, the present invention is a server apparatus for providing content that is a digital work to a recording medium apparatus, including: a first encryption unit for encrypting the content in a manner unique to the content to generate encrypted content; and a second encryption unit for, in compliance with a predetermined distribution data format, encrypting usage condition data that expresses conditions for using the content, in a manner unique to the recording medium apparatus, to generate encrypted usage data.

Here, the server apparatus further includes a distribution public key obtaining unit for securely obtaining a distribution public key that corresponds to a distribution secret key that is stored in a distribution secret key storage area of the recording medium apparatus and that is unique to the recording medium apparatus. The first encryption unit further encrypts content according to a common key encryption method, using a title key unique to the content, to generate encrypted content; the second encryption unit encrypts the title key and the usage condition data according to a public key encryption method, using the distribution public key obtained by the distribution public key obtaining unit, to generate an encrypted title key and encrypted usage condition data.

Here, the second encryption unit in the server apparatus encrypts the title key and usage condition related information according to the public key encryption method, using the distribution public key, to generate an encrypted title key and encrypted usage condition related information. Here, the usage condition related information includes at least one of (a) a usage condition data digest value, and (b) a usage condition key used in encryption and decryption of the usage condition data. When the usage condition related information includes the usage condition data digest value, the second encryption unit generates the usage condition data digest value by applying a hash function to the usage condition data. When the usage condition related information includes the usage condition key, the second encryption unit encrypts the usage condition data according to a common key encryption method, using the usage condition key.

Here, the server apparatus further includes a first authentication unit. Before the server apparatus obtains the distribution public key from the recording medium apparatus or before the encrypted title key and the encrypted usage condition data are obtained by the recording medium apparatus, the first authentication unit of the server apparatus authenticates the recording medium apparatus, and the first authentication unit of the recording medium apparatus authenticates the server apparatus. When both authentications succeed, the server apparatus obtains the distribution public key from the recording medium apparatus, or the encrypted title key and the encrypted usage condition data are obtained from the server apparatus by the recording medium apparatus.

Here, when the distribution secret key of the recording medium apparatus is exposed, the second encryption unit of the server apparatus registers the distribution public key corresponding to the distribution secret key on a revoke list, and prohibits encryption of the recording medium apparatus of the tile key and the usage condition data using the registered distribution public key, and provision thereof to the recording medium apparatus.

Furthermore, the present invention is a playback apparatus for reading content that is a digital work from a recording medium apparatus, and reproducing the read content, including: a reading unit for reading encrypted content from the first storage area of the recording medium apparatus, and re-encrypted usage condition data from a second storage area of the recording medium apparatus; a third decryption unit that corresponds to a third encryption unit of the recording medium apparatus, and that is for decrypting the re-encrypted usage condition information read by the reading unit; a first decryption unit that corresponds to a first encryption unit of the server apparatus, and that is for decrypting the encrypted content read by the reading unit; and a playback unit for reproducing the content decrypted by the first decryption unit, within a scope permitted by the usage condition data decrypted by the third decryption unit.

Here, the playback apparatus further includes a recording medium apparatus unique key obtaining unit for securely obtaining the recording medium apparatus unique key stored in a recording medium apparatus unique key storage area of the recording medium apparatus. Here, the reading unit reads the re-encrypted title key and the re-encrypted usage condition data from the recording medium apparatus. The third decryption unit decrypts the re-encrypted title key and the re-encrypted usage condition data read by the reading unit, with the recording medium apparatus unique key, according to the common key encryption method. The first decryption unit decrypts the encrypted content, using the title key, according to the common encryption method. Then the playback unit plays back the decrypted content within a scope permitted by the usage condition data.

Here, the playback apparatus and the recording medium apparatus further respectively include a second authentication unit. Before the playback apparatus obtains the medium unique key from the recording medium apparatus, or before the encrypted title key and the encrypted usage condition data are read from the playback apparatus by the recording medium apparatus, the second authentication unit of the playback apparatus authenticates the recording medium apparatus, and the second authentication unit of the recording medium apparatus authenticates the playback apparatus. When both authentications succeed, the recording medium apparatus obtains the medium authentic key from the recording medium apparatus, or the encrypted usage condition data is read from the playback apparatus by the recording medium apparatus.

Here, the usage condition data includes information for controlling the number of times the content is played back, or information for controlling a period in which the content is played back, or information for controlling the accumulated playback time of the content.

As is clear from the above description, in the digital work protection system, recording medium apparatus, server apparatus, and playback apparatus of the present invention, since decryption and re-encryption (decryption conversion) of the encrypted title key and usage condition data are performed in the tamper-proof module unit of the recording medium apparatus, hacking is made very difficult for a dishonest third party.

Furthermore, it is also possible to safely update the tamper-proof module that performs encryption conversion and format conversion in the recording medium apparatus.

### 5. Modifications

The digital work protection system of the present invention is not limited to the described embodiments. The following structures are also possible.
(1) Other encryption techniques may be used instead of the use of DES and elliptic curve encryption as encryption algorithms described in the embodiments.
(2) The embodiments describe purchased content having usage conditions being stored on the memory card, and the content played back from the memory card, however, whether the content is purchased it is not essential to the present invention. For example, the same procedures may be used for free trial content that has usage conditions.
(3) The recording medium apparatus in which the content is stored is not limited to the memory card described in the embodiments, but may be another type of recording medium.
(4) In the embodiments the whole of the content is encrypted, but it is possible to encrypt only part of the content.
(5) Usage condition data is not limited to being appended to each content as described in the embodiments.
   For example, the usage condition data may indicate purchasing of up to 100 pieces of music data per month. In this case, a possible structure is one in which the usage condition judgement unit does not permit playback of the content recorded in the storage area of the memory card once the monthly contract has been ended.
(6) It is not necessary for usage condition data to be appended to the content as described in the embodiments. The present invention is applicable even without usage content data.
(7) If the memory card's distribution secret key is exposed, the content server apparatus may register the distribution public key corresponding to the distribution secret key on a revoke list, and prohibit provision to the memory card of the title key and so on that have been encrypted using the registered distribution public key.
(8) The memory card's tamper-proof module unit may include tamper-proof hardware or tamper-proof software, or a combination of both.
(9) A structure is possible in which when the distribution data format or the recording data format is changed, the tamper-proof module that composes the data format conversion unit of the memory card is updated.
(10) A structure is possible in which when the encryption method (elliptic curve, DES, etc.) used by the content distribution server apparatus is changed or an additional method added, or when it is necessary to update or add to the encryption methods used in the tamper-proof modules of the memory card in correspondence with an additional method, the tamper-proof modules are updated.
(11) In (9) or (10), a structure is possible in which the memory card includes a tamper-proof module judgement unit for judging the authenticity of a tamper-proof module to be updated, and the tamper-proof module updated only when it is judged to be authentic.
(12) A structure is possible in which the memory card is provided with a plurality of encryption methods in advance, one method is selected from amongst the plurality of methods, and encryption and decryption are performed using the selected method.
(13) A structure is possible in which the memory card stores a plurality of distribution secret keys in advance, and the elliptic curve decryption unit uses one key selected from among the distribution secret keys.
(14) The digital work protection system described in the embodiments is not limited to including a headphone stereo. For example, instead of a headphone stereo, the system may include a mobile telephone, an L-mode landline telephone, a mobile information terminal apparatus, a personal computer, or an electrical appliance such as a television that connects to the Internet. Such playback apparatuses play back digital works such as music, movies, electronic books, and game programs.
   Furthermore, the content distribution server 200 and the PC 300 are not limited to being connected via the Internet 30, but may instead be connected via, for example, the Internet and a mobile telephone network. Furthermore, a broadcast apparatus may be connected to the content distribution server, information such as content broadcast on a broadcast wave, and the electrical appliance such as a television may received the broadcast wave, and extract the various types of information from the received broadcast wave.
(15) The present invention may be methods shown by the above. Furthermore, the methods may be a computer program realized by a computer, and may be a digital signal of the computer program.
   Furthermore, the present invention may be a computer-readable recording medium apparatus such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory, that stores the computer program or the digital signal. Furthermore, the present invention may be the computer program or the digital signal recorded on any of the aforementioned recording medium apparatuses.
   Furthermore, the present invention may be the computer program or the digital signal transmitted on a electric communication line, a wireless or wired communication line, or a network of which the Internet is representative.
   Furthermore, the present invention may be a computer system that includes a microprocessor and a memory, the memory storing the computer program, and the microprocessor operating according to the computer program.
   Furthermore, by transferring the program or the digital signal to the recording medium apparatus, or by transferring the program or the digital signal via a network or the like, the program or the digital signal may be executed by another independent computer system.
(16) The present invention may be any combination of the above-described embodiments and modifications.
   Although the present invention has been fully described by way of examples with reference to the accompanying drawings, it is to be noted that various changes and modifications will be apparent to those skilled in the art. Therefore, unless otherwise such changes and modifications depart from the scope of the present inventions, they should be construed as being included therein.

## Claims

1. A transmission apparatus that transmits a digital work via a network, the transmitted digital work being written to a portable recording medium apparatus via a reception apparatus,
the transmission apparatus comprising:
a storage unit operable to store in advance original content that is the digital work, and an original content key that is unique to the original content;
a distribution encryption key obtaining unit operable to obtain a distribution encryption key that is used in digital work distribution;
an encryption unit operable to encrypt the original content using the original content key, to generate encrypted content, and encrypt the original content key using the obtained distribution encryption key, to generate a first encrypted content key; and
a transmission unit operable to transmit the encrypted content and the first encrypted content key via the network.
wherein the storage unit further stores usage condition information that shows conditions for using the digital work, and an original usage condition key that is unique to the usage condition information,
the encryption unit further encrypts the original usage condition key using the distribution encryption key, to generate a first encrypted usage condition key, and encrypts the usage condition information using the original usage condition key, to generate first encrypted usage condition information, and
the transmission unit further transmits the first encrypted usage condition key and the first encrypted usage condition information via the network.

2. The transmission apparatus of claim 1,
wherein the distribution encryption key obtaining unit obtains the distribution encryption key, the distribution encryption key being a public key generated using a public key generation algorithm, and
the encryption unit encrypts using the distribution encryption key according to a public key encryption algorithm.

3. The transmission apparatus of claim 2, further comprising:
a revoke list unit that includes an area for recording an invalid distribution encryption key; and
a registration unit operable to, when the distribution decryption key used in generating the distribution encryption key is exposed, write the distribution encryption key to the revoke list unit, and
the distribution key obtaining unit, when the transmission apparatus newly transmits content that is a digital work, obtains a new distribution key, judges whether the obtained distribution key is written in the revoke list unit, and, when the obtained distribution key is written in the revoke list unit, prohibits the encryption unit to encrypt and prohibits the transmission unit to transmit.

4. The transmission apparatus of claim 1,
wherein the storage unit further stores usage condition information that shows conditions for using the digital work, and
the transmission unit reads the usage condition information from the storage unit, applies a hash algorithm to the read usage condition information, to generate a hash value, and transmits securely the generated hash value and the read usage condition information via the network.

5. The transmission apparatus of claim 1, further comprising:
an authentication unit operable to perform mutual device authentication with the recording medium apparatus,
wherein the distribution encryption key obtaining unit obtains the distribution encryption key from the recording medium apparatus only when the authentication succeeds,
the encryption unit encrypts only when the authentication succeeds,
the transmission unit transmits only when the authentication succeeds.

6. The transmission apparatus of claim 1, further comprising:
an update information storage unit operable to store in advance update information for updating a tamper-proof module unit of the recording medium apparatus; and
an update information transmission unit operable to read the update information from the update information storage unit, and transmit the read update information via the network and the reception apparatus to the recording medium apparatus.

7. The transmission apparatus of claim 6, further comprising:
a hash unit operable to read the update information from the update information storage unit, apply a hash algorithm to the read update information, to generate a hash value, and transmit securely the generated hash value via the network and the reception apparatus to the recording medium apparatus.

8. The transmission apparatus of claim 7,
wherein the update information includes information for updating in the tamper-proof module unit at least one of (a) an encryption method, (b) a decryption method, and (c) a data conversion method of converting a distribution data format to a recording data format, and
the update information transmission unit reads the update information, and transmits the read update information.
